# EUROPÄISCHE PATENTSCHRIFT

(11) **EP 3 883 736 B1**
(45) Veröffentlichungstag und Bekanntmachung des Hinweises auf die Patenterteilung: **11.10.2023**
(21) Anmeldenummer: 19798613.6
(22) Anmeldetag: 05.11.2019
(51) Int. Cl.: B29C 33/64, B29C 37/00, B29K 105/04, B29L 31/50

(54) **MANUELLES VERFAHREN ZUM SPRITZFORMEN VON BESCHICHTETEN BAUTEILEN**
MANUAL METHOD FOR INJECTION MOLDING OF COATED PARTS
PROCÉDÉ MANUEL DE MOULAGE PAR INJECTION DE COMPOSANTS REVÊTUS

(30) Priorität: 23.11.2018 EP 18208045
(43) Veröffentlichungstag der Anmeldung: 29.09.2021
(73) Patentinhaber: BASF Coatings GmbH, 48165 Münster (DE)
(72) Erfinder: REUTER, Karin, 48165 Münster (DE); FEDELER, Lea, 48165 Münster (DE); WINZEN, Simon, 48165 Münster (DE); NOATSCHK, Jens-Henning, 48165 Münster (DE); LENZ, Joerg, 48165 Münster (DE)
(74) Vertreter: BASF IP Association
(86) Internationale Anmeldenummer: PCT/EP2019/080224
(87) Internationale Veröffentlichungsnummer: WO 2020/104185

(56) Entgegenhaltungen:
- WO-A1-2016/028568
- DE-A1-102010 031 376
- DE-C1- 19 650 076
- DE-C1- 19 738 192
- JP-A- H07 329 099

## Beschreibung

Die vorliegende Erfindung betrifft ein manuelles Verfahren zum Spritzformen von beschichteten Bauteilen, insbesondere beschichteten Sohlen aus Kunststoff, bei welchem zunächst das Formwerkzeug mit einer Trennmittelzusammensetzung eingetrennt und nach Ablüften dieser Trennmittelzusammensetzung eine Zusammensetzung zur Ausbildung des Bauteils eingespritzt wird. Nach Vernetzen dieser beiden Zusammensetzungen wird das hergestellte beschichtete Bauteil aus dem Formwerkzeug entnommen und gegebenenfalls einer Nachbehandlung unterzogen.

### Stand der Technik

Die Herstellung verschiedenster Bauteile mit variablen Schichtdicken erfolgt heutzutage zumeist mittels des Spritzgussverfahrens. Bestimmte Materialien, insbesondere Schaumstoffe mit geringer Dichte, sind zur Herstellung von Bauteilen jedoch ungeeignet, weil sie Probleme hinsichtlich der Verschmutzungsneigung, der UV-Stabilität sowie der defektfreien Verarbeitung aufweisen können. Allerdings besteht gerade im Bereich der Herstellung von Schuhsohlen oder im Bereich der Möbelindustrie ein anhaltender Bedarf an derartigen Bauteilen zur Herstellung von Schuhen oder Polstermöbeln. Ein verbesserter Schutz derartiger Bauteile kann unter anderem durch eine Beschichtung erreicht werden. Die Beschichtung muss einerseits eine gute Haftung auf dem Bauteil aufweisen, andererseits jedoch ausreichend flexibel und elastisch sein, um den Einsatz der beschichteten Bauteile auch in Bereichen mit hoher mechanischer Beanspruchung zu ermöglichen.

Die Beschichtung der Bauteile erfolgt derzeit meist nach deren Herstellung, beispielsweise im Overmoulding-Verfahren oder durch nachträgliche Lackierungsverfahren. Derartige Verfahren sind jedoch ineffizient, da nach der Herstellung ein weiterer Verfahrensschritt erforderlich ist. Zudem muss vor einer weiteren Beschichtung mit beispielsweise einem Basislack oder der Verklebung mit anderen Bauteilen das bei der Herstellung der Bauteile verwendete externe Trennmittel, welches eine beschädigungsfreie Entformung der Bauteile aus dem Formwerkzeug ermöglicht, durch aufwändige Reinigungsverfahren entfernt werden. Darüber hinaus müssen auch die verwendeten Werkzeuge laufend gereinigt werden.

Weitere, mit der Verwendung externer Entformungsmittel verbundene Nachteile bestehen darin, dass häufig eine Unverträglichkeit zwischen Trennmittel und der zur Herstellung des Bauteils verwendeten Zusammensetzung und/oder Trennmittel und Formwerkzeug vorliegt, was zu Haftungsproblemen führt. Zudem erhöhen sich bei der Verwendung externer Trennmittel der Verfahrensaufwand und somit die Prozesszeiten. Des Weiteren führt der Einsatz externer Trennmittel häufig zu glänzenden Oberflächen der hergestellten Bauteile, was insbesondere in der Schuhindustrie unerwünscht ist. Darüber hinaus werden insbesondere beim Einsatz von Schäumen zur Herstellung von Bauteilen unregelmäßige Oberflächenstrukturen, insbesondere raue und auch teilweise offene Fasern oder Poren aufweisende Oberflächenstrukturen erhalten, welche sich weder durch Einsatz eines externen Trennmittels noch durch nachfolgende Beschichtung durch die Beschichtungsschichten, in der Regel Füllerschichten, Basislackschichten und Klarlackschichten, vollständig beseitigen lassen.

Externe Trennmittel sowie deren Einsatz bei der Herstellung von Formkörpern aus Kunststoffen sind beispielsweise in der DE 197 38 192 C1, der DE 196 50 076 C1, der JP H07-329099 A sowie der DE 10 2010 031376 A1 beschrieben.

Die DE 197 38 192 C1 beschreibt eine wässrige Trennmittelzusammensetzung, welche ein γ-Aminopropytgruppen enthaltendes Polysiloxan, ein Polydimethylsiloxan sowie mindestens einen nichtionischen Emulgator umfasst.

In der DE 196 50 076 C1 wird eine Lösungsmittelhaltige Trennmittelzusammensetzung beschrieben, welche ein γ-Aminopropytgruppen enthaltendes Polysiloxan sowie ein Polydimethylsiloxan umfasst.

Gemäß der JP H07-329099 A wird als externes Trennmittel eine Lösung eines bei Raumtemperatur härtbaren Silikonkautschuks in einem organischen Lösungsmittel eingesetzt.

Schließlich beschreibt die DE 10 2010 031376 A1 eine Trennmittelzusammensetzung, welche mindestens eine funktionalisierte Alkyl- oder Alkoxygruppe aufweisende Siloxanverbindung sowie mindestens ein Phosphat und/oder Phosphorsäureester enthält. Diese Trennmittelzusammensetzung kann zum einen als externes Trennmittel in Form einer wässrigen Emulsion eingesetzt werden. Zum anderen kann diese Trennmittelzusammensetzung auch als internes Trennmittel verwendet werden, wobei in diesem Fall der Zusatz zu der härtbaren Kunststoffmischung.

Die WO 2016/028568 A1 beschreibt ein in-mould coating Verfahren bei welchem zunächst ein Formling hergestellt und dieser Formling anschließend in einer weiteren Form mit einer Beschichtung, dem sogenannten in-mould coating überzogen wird. Zur besseren Entformbarkeit des Formlings aus der ersten Form kann ein silikonbasiertes externes Trennmittel eingesetzt werden. Die im zweiten Schritt eingesetzte in-mould coating Zusammensetzung kann ebenfalls eine Silikonverbindung enthalten, um die Entformbarkeit des beschichteten Formlings zu verbessern. Von Vorteil wäre demnach ein manuelles Verfahren zur Herstellung von beschichteten Bauteilen, bei welchem bereits während der Herstellung des Bauteils eine Beschichtung erfolgt und bei welchem zudem auf den Einsatz von externen Trennmitteln verzichtet werden kann. Jedoch sollte trotz des Verzichts auf externe Trennmittel eine beschädigungsfreie Entformung der beschichteten Bauteile ermöglicht werden. Weiterhin sollten die mit diesem Verfahren hergestellten beschichteten Bauteile keine unregelmäßige Oberfläche aufweisen. Zudem sollten sich mit dem manuellen Verfahren auch Bauteile mit komplexer Geometrie herstellen lassen, ohne dass hierbei Defekte auftreten. Darüber hinaus sollten sich die hergestellten beschichteten Bauteile ohne aufwändige Reinigungs- und/oder Schleifschritte mit handelsüblichen Basislacken und Klarlacken nachbeschichten und/oder unter Verwendung von Klebstoffen verkleben lassen.

### Aufgabe und Lösung

Aufgabe der vorliegenden Erfindung war es demzufolge, ein manuelles Verfahren zum Spritzformen von beschichteten Bauteilen, insbesondere Sohlen aus Kunststoff, bereitzustellen, welches kurze Prozesszeiten sowie eine beschädigungsfreie Entformung erlaubt und bei welchem die hergestellten beschichteten Bauteile ohne aufwändige Reinigungs- und/oder Schleifschritte mit handelsüblichen Basislacken und Klarlacken nachbeschichtet und/oder unter Verwendung von Klebstoffen verklebt werden können. Weiterhin sollte die Oberfläche der beschichteten hergestellten Bauteile keine Unregelmäßigkeiten aufweisen. Zudem sollten sowohl die mechanischen Eigenschaften als auch die Beständigkeit der hergestellten beschichteten Bauteile gegenüber Umwelteinflüssen verbessert werden. Darüber hinaus sollten sich mit dem manuellen Verfahren auch Bauteile mit komplexer Geometrie herstellen lassen, ohne dass hierbei Defekte auftreten

### Lösung der Aufgabe

Es wurde gefunden, dass die genannten Aufgaben gelöst werden konnten durch ein neues manuelles Verfahren zum Spritzformen von beschichteten Bauteilen, insbesondere Sohlen aus Kunststoff, umfassend die nachfolgenden Schritte in der angegebenen Reihenfolge:
(A) Applizieren einer Trennmittelzusammensetzung auf mindestens eine Innenseite mindestens eines Formteils eines verschließbaren Formwerkzeugs,
(B) Ablüften der in Schritt (A) applizierten Trennmittelzusammensetzung,
(C) gegebenenfalls Einlegen mindestens eines Materials M1 und Erhitzen des Formwerkzeugs,
(D) Applizieren einer Zusammensetzung Z1 in das geöffnete Formwerkzeug,
(E) Manuelles Verschließen des Formwerkzeugs,
(F) Vernetzen der Trennmittelzusammensetzung sowie der in Verfahrensschritt (D) applizierten Zusammensetzung Z1,
(G) gegebenenfalls Applizieren mindestens einer weiteren Zusammensetzung Z2 sowie Vernetzen dieser Zusammensetzung(en),
(H) Manuelles Öffnen des Formwerkzeugs,
(I) Manuelle Entnahme des geformten und beschichteten Bauteils und
(J) gegebenenfalls Nachbehandlung des geformten und beschichteten Bauteils, wobei die Trennmittelzusammensetzung umfasst:
   (a) mindestens ein Lösungsmittel L
   (b) mindestens eine Verbindung der allgemeinen Formel (I)

      R¹-(C=O)ᵣ-O-(AO)ₛ-R² (I)

      worin R¹ ein gesättigter oder ungesättigter, aliphatischer Kohlenwasserstoffrest mit 6 bis 30 Kohlenstoffatomen ist,
      R² für H, einen Rest PO(OH)₂ oder den gegebenenfalls teilweise phosphatierten Rest eines Mono- oder Disaccharids oder den gegebenenfalls teilweise phosphatierten Rest eines Alditols steht,
      AO für einen oder mehrere Alkylenoxid-Reste gewählt aus der Gruppe bestehend aus Ethylenoxid, Propylenoxid und Butylenoxid steht,
      r = 0 oder 1 ist, und s = 0 bis 30 ist;
   (c) gegebenenfalls mindestens ein polyethermodifiziertes Alkylpolysiloxan
   (d) mindestens ein Polysiloxan der allgemeinen Formel (II)

      R³-Si(R⁴)₂-[O-Si(R⁴)(R⁵)]ₐ-[O-Si(R⁴)₂]_{b}-O-Si(R⁴)₂-R³ (II),

      worin
      R³ und R⁴, jeweils unabhängig voneinander, für eine Methylgruppe oder einen Rest (HO-CH₂)₂-C(CH₂-CH₃)-CH₂-O-(CH₂)₃-* stehen,
      R⁵ für eine Methylgruppe steht,
      a für 0 oder 1 bis 10 steht und
      b für 3 bis 30 und
   (e) mindestens ein Bindemittel B,
   wobei die Trennmittelzusammensetzung zusätzlich mindestens ein Vernetzungsmittel V enthält.

Das oben genannte Verfahren wird in der Folge auch als erfindungsgemäßes Verfahren bezeichnet und ist dementsprechend Gegenstand der vorliegenden Erfindung. Bevorzugte Ausführungsformen des erfindungsgemäßen Verfahrens sind der weiter unten folgenden Beschreibung sowie den Unteransprüchen zu entnehmen.

Das in dem erfindungsgemäßen Verfahren eingesetzte Trennmittel erlaubt aufgrund der geringen Ablüft- und Vernetzungszeiten nicht nur kurze Prozesszeiten, sondern führt auch zu einer beschädigungsfreien Entformung der hergestellten beschichteten Bauteile. Zudem weist dieses Trennmittel eine hohe Haftung auf dem hergestellten Bauteil auf und erlaubt eine Nachbeschichtung mit handelsüblichen Basis- und Klarlacken und/oder eine Verklebung ohne aufwändige Reinigungs- und/oder Schleifschritte. Auch ohne Nachbeschichtung ist die durch das Trennmittel auf dem Bauteil erhaltene Beschichtung hochelastisch bzw. flexibel sowie UV-beständig und weist einen konstanten Glanzgrad bzw. Mattgrad auf, so dass nicht nur eine beschädigungsfreie Entformung des beschichteten Bauteils, sondern auch ein effektiver Schutz des hergestellten beschichteten Bauteils gegen Umwelteinflüsse, wie UV-Strahlung, Schmutz oder dergleichen, bereits direkt nach der Herstellung, also ohne weitere Behandlung des Bauteils, erreicht wird. Weiterhin weisen die hergestellten beschichteten Bauteile selbst dann eine regelmäßige Oberfläche auf, wenn zu deren Herstellung Schäume verwendet werden, welche in Kombination mit herkömmlichen Trennmitteln zu Bauteilen mit sehr unregelmäßiger Oberfläche führen. Darüber hinaus konnten auch Bauteile mit komplexen Geometrien, beispielsweise Schuhsohlen sowie Bauteile mit wenigen Millimetern breiten Stegen, ohne Defekte hergestellt werden. Da nur geringe Rückstände des Trennmittels in dem Formwerkzeug verbleiben, müssen die verwendeten Formwerkzeuge nicht vor jeder erneuten Applikation des Trennmittels gereinigt werden.

### Ausführliche Beschreibung

### Definitionen:

Zunächst seien einige im Rahmen der vorliegenden Erfindung verwendeten Begriffe erläutert.

Bei dem erfindungsgemäßen Verfahren handelt es sich um ein manuelles Verfahren. Hierunter wird im Rahmen der vorliegenden Erfindung verstanden, dass dieses Verfahren nicht an strenge Taktzeiten pro Verfahrensschritt gebunden ist. Folglich variiert die Zeitspanne, welche zur Durchführung jedes Verfahrensschritts bei mehrfacher Wiederholung des Verfahrens benötigt wird, stark. Dies bedeutet also, dass bei beispielsweise zweifacher Wiederholung des Verfahrens für den Verfahrensschritt (C) einmal eine Minute und einmal 5 Minuten benötigt werden können. Unter manuelle Verfahren im Sinne der vorliegenden Erfindung fallen daher keine Verfahren, in welchen die einzelnen Verfahrensschritte an strenge Taktzeiten gebunden sind, also bei mehrfacher Wiederholung des Verfahrens für einen Verfahrensschritt immer exakt die gleiche Zeitspanne eingehalten werden muss bzw. die Zeitspanne nur sehr minimal variieren darf.

Jedoch ist unter dem Begriff manuelles Verfahren im Sinne der vorliegenden Erfindung nicht zu verstehen, dass derartige Verfahren keine automatisierten Verfahrensschritte, beispielsweise unter Verwendung von Robotern, umfassen können. Ausschlaggebend dafür, ob ein Verfahren als manuelles Verfahren im Sinne der vorliegenden Erfindung zu verstehen ist oder nicht ist daher einzig und allein die Verfahrensführung ohne Bindung an strenge Taktzeiten.

Unter einem Bauteil wird erfindungsgemäß ein Einzelteil verstanden, welches mit anderen Bauteilen verbunden eine Baugruppe bildet. Handelt es sich beim Bauteil also um das Teil einer Karosserie, beispielsweise eines Kraftfahrzeugs, so kann dieses mit anderen Karosseriebauteilen zu einer Karosserie zusammengefügt werden. Handelt es sich beim Bauteil beispielsweise um eine Schuhsohle, so kann diese mit anderen Bauteilen eines Schuhs zu einem solchen zusammengefügt werden. Allgemein betrifft die Erfindung jedoch unabhängig vom Zweck des Materials als Bauteil dienen zu können, generell die Herstellung beschichteter Bauteile und ist somit nicht auf Bauteile im obigen Sinne beschränkt. Ist daher im Folgenden von der Beschichtung von Bauteilen die Rede, so umfasst dies allgemein auch die Beschichtung von Materialien ohne "Bauteilfunktion", d.h. derartige Materialien müssen nicht zwangsläufig als Bauteil zur Herstellung von Baugruppen verwendet werden.

Unter einem beschichteten Bauteil wird erfindungsgemäß ein Bauteil verstanden, welches an der Oberfläche mit einer Beschichtung versehen ist. Die Beschichtung wird erfindungsgemäß durch Vernetzung der Trennmittelzusammensetzung während der Herstellung des Bauteils auf dessen Oberfläche aufgebracht. Bei der Beschichtung des Bauteils handelt es sich folglich um die vernetzte Trennmittelzusammensetzung.

Unter dem Begriff "Innenseite" wird erfindungsgemäß die Oberfläche eines Formteils eines Formwerkzeugs verstanden, welche mit der Trennmittelzusammensetzung sowie mit der Zusammensetzung Z1 und gegebenenfalls weiterer in dem Verfahren verwendeter Zusammensetzungen und Materialien während der Herstellung des Bauteils in Kontakt kommt.

In Verfahrensschritt (B) des erfindungsgemäßen Verfahrens wird die applizierte Trennmittelzusammensetzung abgelüftet. Hierunter wird erfindungsgemäß das Verdunsten beziehungsweise Verdunsten lassen von Lösemitteln des Trennmittels, meist bei gegenüber der Umgebungstemperatur erhöhter Temperatur von beispielsweise 40 bis 90°C, verstanden. Während des Ablüftens verdunsten also Lösemittel, welche in dem aufgebrachten Trennmittel enthalten sind. Da das Trennmittel jedenfalls direkt nach dem Auftragen und zu Beginn des Ablüftens noch fließfähig ist, kann es während des Ablüftens verlaufen. Denn zumindest ein durch Spritzapplikation aufgetragenes Trennmittel wird in der Regel tröpfchenförmig und nicht in homogener Dicke aufgetragen. Es ist aber durch die enthaltenen Lösemittel fließfähig und kann somit durch das Verlaufen einen homogenen, glatten Beschichtungsfilm bilden. Gleichzeitig verdunsten Lösemittel sukzessive, sodass nach der Ablüftphase eine vergleichsweise glatte Beschichtungsschicht entstanden ist, welche im Vergleich zum aufgebrachten Trennmittel weniger Lösemittel enthält. Die Trennmittelschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Trennmittelschicht noch nicht wie weiter unten beschrieben vernetzt.

Der Begriff "Poly(meth)acrylat" steht sowohl für Polyacrylate als auch für Polymethacrylate. Poly(meth)acrylate können daher aus Acrylaten und/oder Methacrylaten aufgebaut sein und weitere ethylenisch ungesättigte Monomere enthalten wie beispielsweise Styrol oder Acrylsäure.

Der Begriff "aliphatischer Rest" steht hierin für einen Rest einer acyclischen oder cyclischen, gesättigten oder ungesättigten Kohlenstoffverbindung, wobei dieser Rest keine aromatischen Strukturen enthält. Aliphatische Reste können dementsprechend aber Heteroatome, wie beispielsweise Sauerstoff oder Stickstoff, enthalten.

In Verfahrensschritt (F) und gegebenenfalls (G) werden die Trennmittelzusammensetzung, die Zusammensetzung Z1 sowie gegebenenfalls weitere Zusammensetzungen vernetzt. Hierunter ist die Härtung dieser Zusammensetzungen, also die Überführung dieser Zusammensetzungen in den gebrauchsfertigen Zustand, das heißt also in einen Zustand, in der das mit der Trennmittelschicht ausgestattete Bauteil transportiert, gelagert und bestimmungsgemäß verwendet werden kann. Eine vernetzte Trennmittelschicht sowie ein vernetztes Bauteil ist also insbesondere nicht mehr weich oder klebrig, sondern als fester Trennmittelfilm bzw. als festes Bauteil konditioniert. Der Film bzw. das Bauteil ändert auch bei weiterer Aussetzung mit wie weiter unten beschriebenen Vernetzungsbedingungen seine Eigenschaften wie Härte oder Haftung auf dem Untergrund nicht mehr wesentlich.

Bekanntermaßen können Trennmittelzusammensetzung sowie die zur Herstellung des Bauteils verwendeten Zusammensetzungen (Z1, Z2 etc.) grundsätzlich physikalisch und/oder chemisch gehärtet werden, je nach enthaltenen Komponenten wie Bindemitteln und Vernetzungsmitteln. insbesondere werden die Zusammensetzungen chemisch gehärtet. Bei der chemischen Härtung kommen die thermisch-chemische Härtung und die aktinisch-chemische Härtung in Betracht. Das Trennmittel sowie die Zusammensetzungen (Z1, Z2 ect.) können, sofern sie thermisch-chemisch härtbar sind, selbst- und/oder fremdvernetzend sein. Unter der Angabe selbst- und/oder fremdvernetzend ist im Rahmen der vorliegenden Erfindung zu verstehen, dass Polymere (auch Polymerisate genannt) als Bindemittel und gegebenenfalls Vernetzungsmittel enthalten sind, welche entsprechend miteinander vernetzen können. Die zugrunde liegenden Mechanismen sowie einsetzbaren Bindemittel und Vernetzungsmittel (filmbildende Komponenten) werden weiter unten beschrieben.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung der Zusammensetzung (Bildung einer gehärteten Zusammensetzung), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Zusammensetzung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer oder eine erste Verbindung enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, welche zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Mehrkomponentensysteme, insbesondere Zweikomponentensysteme, in Betracht. In diesen Systemen liegen die zu vernetzenden Komponenten, beispielsweise die organischen Polymere als Bindemittel und die Vernetzungsmittel, getrennt voneinander in mindestens zwei Komponenten vor, welche erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung einer als chemisch härtbar gekennzeichneter Zusammensetzung immer auch eine physikalische Härtung, das heißt eine Verschlaufung von Polymerketten, auftreten. Die physikalische Härtung kann sogar den überwiegenden Anteil ausmachen. Trotzdem wird eine solche Zusammensetzung, sofern es zumindest anteilig filmbildende Komponenten enthält, die chemisch härtbar sind, als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Grundsätzlich und im Rahmen der vorliegenden Erfindung gilt, dass die Härtung von thermisch-chemisch härtbaren Zweikomponenten- oder Dreikomponenten-Systemen bei Temperaturen von beispielsweise 40 bis 90°C, wie insbesondere 40 bis 90°C, für eine Dauer von 5 bis 80 min, bevorzugt 4 bis 6 min, durchgeführt werden kann. Dementsprechend gilt, dass eine vor der Härtung stattfindende Ablüftphase bei geringeren Temperaturen und/oder für kürzere Zeiten erfolgt. Eine der Härtung vorausgehende Ablüftphase kann beispielsweise bei 15 bis 90°C für eine Dauer von beispielsweise 0,2 bis 2 min ablaufen, jedoch jedenfalls bei geringere Zeiten und/oder Temperaturen als die dann folgende Härtung.

Alle im Rahmen der vorliegenden Erfindung erläuterten Temperaturen verstehen sich als Temperatur des Formwerkzeugs, in welchem sich die Zusammensetzungen befinden. Gemeint ist also nicht, dass die Zusammensetzungen selbst die entsprechende Temperatur aufweisen müssen.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen. Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Erfindungsgemäßes Verfahren:

Im Rahmen des erfindungsgemäßen Verfahrens wird ein beschichtetes Bauteil durch Spritzformen hergestellt. Bei diesem beschichteten Bauteil handelt es sich erfindungsgemäß bevorzugt um eine Sohle, insbesondere Schuhsohle, aus Kunststoff.

### Verfahrensschritt (A):

In Schritt (A) des erfindungsgemäßen Verfahrens wird eine Trennmittelzusammensetzung auf mindestens eine Innenseite eines Formteils eines verschließbaren Formwerkzeugs appliziert. Es ist erfindungsgemäß bevorzugt, wenn die Trennmittelzusammensetzung auf alle Innenseiten aller Formteile des verschließbaren Formwerkzeugs appliziert wird. Hierdurch wird sichergestellt, dass die zur Herstellung des beschichteten Bauteils verwendeten Zusammensetzungen (Z1, Z2, etc.) sowie Materialien M1 bei der Entnahme nicht an den Innenseiten der Formteile hängen bleiben und eine beschädigungsfreie Entnahme des beschichteten Bauteils gewährleistet ist. Durch die beschädigungsfreie Entnahme des beschichteten Bauteils wird zudem eine Reinigung des Formwerkzeugs nach jedem Herstellungszyklus vermieden.

Es ist erfindungsgemäß bevorzugt, wenn die Applikation der Trennmittelzusammensetzung in Verfahrensschritt (A) manuell oder unter Einsatz von Applikationsrobotern erfolgt. Die in dem erfindungsgemäßen Verfahren eingesetzte Trennmittelzusammensetzung wird hierbei genauso appliziert wie aus dem Stand der Technik bekannte Trennmittelzusammensetzungen. Durch Einsatz von Applikationsrobotern kann der Automatisierungsgrad des erfindungsgemäßen Verfahrens erhöht werden. Die Roboter werden auf die Geometrie der Sohlenformen programmiert und applizieren pneumatisch und selbstständig das Trennmittel auf die Innenseiten der Formteile des Formwerkzeugs. Die Nutzung von Robotern führt zu einer zusätzlichen Steigerung der Prozessstabilität, da die Applikation gleichmäßiger erfolgt. Außerdem kann die Geschwindigkeit der Applikation durch entsprechende Programmierung gesteigert werden.

Erfolgt die Applikation der Trennmittelzusammensetzung mittels Applikationsrobotern, so ist es erfindungsgemäß bevorzugt, wenn bei der Applikation der Trennmittelzusammensetzung unter Einsatz von Applikationsrobotern Düsen mit einem Durchmesser von 0,05 bis 1,5 mm, vorzugsweise von 0,08 bis 1 mm, insbesondere von 0,1 bis 0,8 mm, verwendet werden. Der Einsatz von Düsen mit den zuvor beschriebenen Durchmessern stellt sicher, dass die Innenseiten der Formteile des Formwerkzeugs vollständig mit einer ausreichenden Menge der Trennmittelzusammensetzung benetzt werden, verhindert jedoch gleichzeitig den Auftrag einer zu großen Menge an Trennmittelzusammensetzung.

Das in Verfahrensschritt (A) eingesetzte Formwerkzeug kann Raumtemperatur aufweisen oder bereits auf eine bestimmte Temperatur aufgeheizt sein. Diese Temperatur darf allerdings nicht so hoch liegen, dass bereits eine Vernetzung der applizierten Trennmittelzusammensetzung stattfindet, da diese in diesem Fall nicht mehr ausreichend auf der zur Herstellung des Bauteils verwendeten Zusammensetzung Z1, Z2 etc. haftet. Erfindungsgemäß bevorzugt weist das Formwerkzeug daher in Verfahrensschritt (A) eine Temperatur von 20 bis 100 °C, besonders bevorzugt 30 bis 90 °C, ganz besonders bevorzugt 40 bis 80 °C, insbesondere 50 bis 70 °C, auf.

### Trennmittelzusammensetzung:

Die erfindungsgemäße Zusammensetzung besitzt vorzugsweise einen Festkörper von 30 bis 60 Gew.-%, bevorzugt von 35 bis 55 Gew.-%, besonders bevorzugt von 40 bis 50 Gew.-%, insbesondere von 42 bis 48 Gew.-%, bezogen auf das Gesamtgewicht der Zusammensetzung. Der Gehalt des Festkörpers wurde gemäß ASTM D2369 (2015) bei 110 °C für 60 min an einer Probe von 2 Gramm der Zusammensetzung bestimmt.

Darüber hinaus ist es erfindungsgemäß bevorzugt, wenn die Zusammensetzung eine Viskosität von 10 bis 60 s, insbesondere von 20 bis 30 s (DIN4 Auslaufbecher), gemessen gemäß DIN EN ISO 2431 (März 2012), aufweist. Die Einstellung einer niedrigen Viskosität erleichtert die Applikation der Zusammensetzung und stellt daher eine ausreichende Benetzung des Formwerkzeugs sowie eine homogene Beschichtung des Bauteils sicher.

### Trennmittelzusammensetzung - Lösungsmittel L (a):

Bei der erfindungsgemäß verwendeten Trennmittelzusammensetzung kann es sich um eine lösungsmittelbasierte oder um eine wässrige Zusammensetzung handeln. Im Falle einer lösungsmittelbasierten Trennmittelzusammensetzung sind als Hauptbestandteil organische Lösungsmittel enthalten. Organische Lösemittel stellen flüchtige Bestandteile der Trennmittelzusammensetzung dar, welche beim Trocknen beziehungsweise Ablüften ganz oder teilweise verdampfen. Wässrige Trennmittelzusammensetzungen enthalten Wasser als Hauptbestandteil.

Erfindungsgemäß bevorzugt ist das mindestens eine Lösungsmittel L ausgewählt aus organischen Lösungsmitteln, Wasser sowie deren Mischungen und in einer Gesamtmenge von 40 bis 70 Gew.-%, besonders bevorzugt 45 bis 65 Gew.-% und ganz besonders bevorzugt 50 bis 60 Gew.-%, insbesondere 52 bis 58 Gew.-%, jeweils bezogen auf das Gesamtgewicht der Zusammensetzung, enthalten.

Im Rahmen der vorliegenden Erfindung bevorzugte organische Lösemittel sind aprotisch. Besonders bevorzugt handelt es sich um polare aprotische organische Lösemittel. Ganz besonders bevorzugt verhalten sich die organischen Lösemittel chemisch inert gegenüber den restlichen Bestandteilen der Zusammensetzung.

Bevorzugte organische Lösemittel sind im Rahmen der vorliegenden Erfindung beispielsweise Ketone wie Aceton, Methylethylketon, Cyclohexanon, Methylisobutylketon, Methylisoamylketon oder Diisobutylketon; Ester wie Ethylacetat, n-Butylacetat, Ethylenglykoldiacetat, Butyrolacton, Diethylcarbonat, Propylencarbonat, Ethylencarbonat, 2-Methoxypropylacetat (MPA) und Ethylethoxypropionat; Amide wie N,N-Dimethylformamid, N,N-Dimethylacetamid, N-Methylpyrrolidon und N-Ethylpyrrolidon; Methylal, Butylal, 1,3-Dioxolan, Glycerolformal; und etwas weniger bevorzugt, da diese unpolar sind, Kohlenwasserstoffe wie Benzol, Toluol, n-Hexan, Cyclohexan und Solventnaphtha. Ganz besonders bevorzugte Lösemittel gehören der Klasse der Ester an, worunter ganz besonders bevorzugt n-Butylacetat und 1-Methoxypropylacetat zu nennen sind.

### Trennmittelzusammensetzung - Verbindung der allgemeinen Formel (I) (b):

Die erfindungsgemäß verwendete Trennmittelzusammensetzung enthält weiterhin eine Verbindung, welche sich durch folgende Formel (I) wiedergeben lässt:

R¹-(C=O)ᵣ-O-(AO)ₛ-R² (I)

worin R¹ ein gesättigter oder ungesättigter, aliphatischer Kohlenwasserstoffrest mit 6 bis 30, vorzugsweise 8 bis 26, besonders bevorzugt 10 bis 24 und ganz besonders bevorzugt 12 bis 24 Kohlenstoffatomen ist,
R² für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30, vorzugsweise 1 bis 25 oder 2 bis 25, besonders bevorzugt 4 bis 22 oder 6 bis 20 und ganz besonders bevorzugt 8 bis 18 ist.

Bei dem Rest R¹ handelt es sich vorzugsweise um einen acyclischen Rest.

Die Reste AO können gleich oder verschieden sein und innerhalb der s Reste statistisch, blockartig oder gradientenartig angeordnet sein. Sind mehrere verschiedene Arten AO enthalten, so ist es bevorzugt, wenn der Anteil an Ethylenoxid mehr als 50 mol%, besonders bevorzugt mindestens 70 mol-% und ganz besonders bevorzugt mindestens 90 mol-%, bezogen auf die Gesamtstoffmenge der Reste AO, beträgt. Vorzugsweise sind den vorgenannten Fällen die von Ethylenoxid verschiedenen Reste Propylenoxid-Reste.

Ist r = 0 und s > 0, so handelt es sich bei den Spezies der Formel (I) um alkoxylierte Fettalkohole, vorzugsweise ethoxylierte Fettalkohole, welche gegebenenfalls phosphatiert (R² = PO(OH)₂) oder mit einem Mono- oder Disaccharid oder dem Rest eines Alditols verethert sind. Ist r = 1 und s > 0, so handelt es sich bei den Spezies der Formel (I) um alkoxylierte Fettsäuren, vorzugsweise ethoxylierte Fettsäuren, welche gegebenenfalls phosphatiert (R² = PO(OH)₂) oder mit einem Mono- oder Disaccharid oder dem Rest eines Alditols verethert sind.

Ist s = 0 und steht R² für den Rest eines Mono- oder Disaccharids oder den Rest eines Alditols, so handelt es sich bei den Spezies der Formel (I) um Fettalkoholether eines Mono- oder Disaccharids oder eines Alditols (r = 0) oder um Fettsäureester eines Mono- oder Disaccharids oder eines Alditols (r = 1).

Besonders bevorzugt gilt, dass für einen Teil oder alle Spezies der Formel (I) s = 2 bis 25, besser noch 6 bis 20 und am besten 8 bis 18 ist und/oder für einen Teil oder alle Spezies der Formel (I) s = 0 ist und R² für einen gegebenenfalls teilweise phosphatierten Rest eines Mono- oder Disaccharids oder einen gegebenenfalls teilweise phosphatierten Rest eines Alditols steht. Besonders bevorzugt steht R¹ in diesem Fall für einen gesättigten oder ungesättigten, aliphatischen Kohlenwasserstoffrest mit 10 bis 24 Kohlenstoffatomen.

Insbesondere können auch Mischungen von Spezies der Formel (I) eingesetzt werden, in welchen für mindestens eine Spezies s = 0 gilt und für mindestens eine weitere Spezies s > 0, vorzugsweise 1 bis 25 oder 2 bis 25, besonders bevorzugt 4 bis 22 oder 6 bis 20 und ganz besonders bevorzugt 8 bis 18 gilt.

Besonders bevorzugt steht in der allgemeinen Formel (I) R¹ für einen gesättigten oder ungesättigten, aliphatischen Kohlenwasserstoffrest mit 10 bis 24 Kohlenstoffatomen, R² für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols, AO für einen oder mehrere Alkylenoxid-Reste gewählt aus der Gruppe bestehend aus Ethylenoxid und Propylenoxid, r = 0 oder 1 und s = 0 oder 1 bis 25.

Weiterhin besonderes bevorzugt steht in der allgemeinen Formel (I) R¹ für einen gesättigten oder ungesättigten, aliphatischen Kohlenwasserstoffrest mit 10 bis 24 Kohlenstoffatomen, R² für H, einen Rest PO(OH)₂ oder den gegebenenfalls teilweise phosphatierten Rest eines Monosaccharids oder den gegebenenfalls teilweise phosphatierten Rest eines Alditols, insbesondere des Sorbitols, AO für einen oder mehrere Alkylenoxid-Reste gewählt aus der Gruppe bestehend aus Ethylenoxid und Propylenoxid und der Ethylenoxidanteil an der Gesamtstoffmenge der Reste AO mindestens 70 mol-% beträgt, r = 0 oder 1 und s = 0 oder s = 6 bis 20.

Ganz besonders bevorzugt handelt es sich um Mischungen, welche die obengenannten alkoxylierten Fettalkohole mit s > 0 und/oder die obengenannten alkoxylierten Fettsäuren mit s > 0 enthalten und wenigstens eine weitere Spezies gewählt aus der Gruppe umfassend
gegebenenfalls phosphatierte oder veretherte Fettalkohole mit r = s = 0 und R² = H, PO(OH)₂, ein Monosaccharid-Rest, Disaccarid-Rest oder Alditol-Rest und gegebenenfalls phosphatierte oder veresterte Fettsäuren mit r = 1, s = 0 und R² = H, PO(OH)₂, Monosaccharid-Rest, Disaccarid-Rest oder Alditol-Rest.

Das Gesamtgewicht der Verbindung der allgemeinen Formel (I) beträgt vorzugsweise 0,1 bis 10 Gew.-%, besonders bevorzugt 0,5 bis 5 Gew.-%, insbesondere 1,5 bis 4 Gew.-%, jeweils bezogen auf das Gesamtgewicht der Trennmittelzusammensetzung. Wird mehr als eine Verbindung der Formel (I) eingesetzt, so beziehen sich die zuvor angegebenen Mengenangaben auf die Gesamtmenge aller Verbindungen, welche unter die Formel (I) fallen. Wird die Verbindung der Formel (I) auf einen bestimmte Verbindung (I-1) beschränkt, so beziehen sich die zuvor angegebenen Mengen nicht lediglich auf die bestimmte Verbindung (I-1), sondern auf die Gesamtmenge an Verbindungen, welche unter die Formel (I) fallen. Wird beispielsweise die Verbindung (I-1) in einer Menge von 5 Gew.-% eingesetzt, so können maximal 7 Gew.-% weiterer Verbindungen, welche unter die Formel (I) fallen, in der Trennmittelzusammensetzung enthalten sein.

### Trennmittelzusammensetzung - Polyethermodifizierte Alkylpolysiloxan (c):

Die erfindungsgemäß verwendete Trennmittelzusammensetzung kann weiterhin mindestens ein polyethermodifiziertes Alkylpolysiloxan enthalten. Der Einsatz derartiger Siloxane führt zu einer verminderten Anschmutzung der erfindungsgemäß hergestellten beschichteten Bauteile.

Bevorzugt umfasst das polyethermodifizierte Alkylpolysiloxan mindestens eine Struktureinheit (R⁷)₂(OR⁶)SiO_{1/2} und mindestens eine Struktureinheit (R⁷)₂SiO_{2/2}, wobei R⁶ für eine Ethylenoxid-, Propylenoxid- und Butylenoxidgruppe, insbesondere eine Mischung von Ethylenoxid- und Propylenoxid- und Butylenoxidgruppen und R⁷ für eine C₁-C₁₀-Alkylgruppe, insbesondere eine Methylgruppe, steht, umfasst.

In diesem Zusammenhang ist es bevorzugt, wenn das polyethermodifizierte Alkylpolysiloxan ein molares Verhältnis von Siloxan : Ethylenoxidgruppen : Propylenoxidgruppen : Butylenoxidgruppen 6 : 21 : 15 : 1 bis 67 : 22 : 16 : 1 aufweist.

Darüber hinaus ist es in diesem Zusammenhang bevorzugt, wenn das polyethermodifizierte Alkylpolysiloxan ein molares Verhältnis der Struktureinheit (R⁷)₂(OR⁶)SiO_{1/2} zu der Struktureinheit (R⁷)₂SiO_{2/2} von 1 : 10 bis 1 : 15, insbesondere von 1 : 10 bis 1 : 13, aufweist. R⁶ und R⁷ weisen hierbei die zuvor angeführten Bedeutungen auf.

Die Trennmittelzusammensetzung kann 0 Gew.-% oder 0,1 bis 6 Gew.-%, bevorzugt 0,5 bis 4 Gew.-%, insbesondere 0,8 bis 3 Gew.-%, jeweils bezogen auf das Gesamtgewicht der Trennmittelzusammensetzung, an polyethermodifizierten Alkypolysiloxanen, insbesondere der zuvor angeführten speziellen polyethermodifizierten Alkylpolysiloxanen, enthalten. Die Abwesenheit derartiger Verbindungen führt zu einer geringeren Klebrigkeit der Zusammensetzung. Dadurch wird eine bessere Entformungswirkung des hergestellten beschichteten Bauteils von dem Formwerkzeug erreicht.

### Trennmittelzusammensetzung - Polysiloxan der Formel (II) (d):

Die erfindungsgemäß verwendete Trennmittelzusammensetzung enthält weiterhin mindestens ein Polysiloxan der allgemeinen Formel (II)

R³-Si(R⁴)₂-[O-Si(R⁴)(R⁵)]ₐ-[O-Si(R⁴)₂]_{b}-O-Si(R⁴)₂-R³ (II),

worin
R³ und R⁴, jeweils unabhängig voneinander, für eine Methylgruppe oder einen Rest (HO-CH₂)₂-C(CH₂-CH₃)-CH₂-O-(CH₂)₃-* stehen,
R⁵ für eine Methylgruppe steht,
a für 0 oder 1 bis 10 steht und
b für 3 bis 30.

Der Rest (HO-CH₂)₂-C(CH₂-CH₃)-CH₂-O-(CH₂)₃-* ist hierbei über das *-Symbol an das Siliziumatom gebunden.

Erfindungsgemäß bevorzugt werden Polysiloxane eingesetzt, welche bestimmte Reste R³ und R⁴ aufweisen. Der Einsatz derartiger Polysiloxane hat sich als vorteilhaft in Bezug auf die verbesserte Entformbarkeit erwiesen, ohne jedoch die Haftung der vernetzten erfindungsgemäßen Zusammensetzung auf dem Bauteil negativ zu beeinflussen. Eine bevorzugte Ausführungsform der vorliegenden Erfindung ist daher dadurch gekennzeichnet, dass in der allgemeinen Formel (II) der Rest R³ für einen Rest (HO-CH₂)₂-C(CH₂-CH₃)-CH₂-O-(CH₂)₃-* steht, der Rest R⁴ für eine Methylgruppe steht, der Rest R⁵ für eine Methylgruppe steht, a für 0 steht und b für 7 bis 14 steht.

Erfindungsgemäß vorteilhaft enthält die Trennmittelzusammensetzung das mindestens eine Polysiloxan der Formel (II), insbesondere die zuvor angeführten speziellen Polysiloxane, in einer bestimmten Gesamtmenge. Es ist daher erfindungsgemäß bevorzugt, wenn die Trennmittelzusammensetzung das mindestens eine Polysiloxan der allgemeinen Formel (II) in einer Gesamtmenge von 0,1 bis 5 Gew.-%, bevorzugt 0,5 bis 4 Gew.-%, insbesondere 0,8 bis 2,5 Gew.-%, jeweils bezogen auf das Gesamtgewicht der Trennmittelzusammensetzung, enthält. Wird mehr als ein Polysiloxan der Formel (II) eingesetzt, so beziehen sich die zuvor angegebenen Mengenangaben auf die Gesamtmenge aller Polysiloxane, welche unter die Formel (II) fallen. Wird das Polysiloxan der Formel (II) auf bestimmte Polysiloxane (II-1) beschränkt, so beziehen sich die zuvor angegebenen Mengen nicht lediglich auf die bestimmten Polysiloxane (II-1), sondern auf die Gesamtmenge an Polysiloxanen, welche unter die Formel (II) fallen. Werden beispielsweise die bestimmten Polysiloxane (II-1) in einer Menge von 2 Gew.-% eingesetzt, so können maximal 3 Gew.-% weiterer Polysiloxane, welche unter die Formel (II) fallen, in der Trennmittelzusammensetzung enthalten sein.

### Trennmittelzusammensetzung - Bindemittel B (e):

Erfindungsgemäß enthält die Trennmittelzusammensetzung neben den zuvor beschriebenen Bestandteilen mindestens ein Bindemittel B. Der Einsatz dieses Bindemittels B führt zu einer Ausbildung einer flexiblen und beständigen Beschichtung auf dem Bauteil, ohne jedoch die Entformbarkeit des Bauteils negativ zu beeinflussen.

Überraschenderweise hat sich gezeigt, dass die Art des Bindemittels B unwesentlich für die mit der Trennmittelzusammensetzung erreichte Entformbarkeit ist. Weiterhin war es überraschend, dass die Trennmittelzusammensetzung unabhängig vom Bindemittel B keinen negativen Einfluss auf die erhaltene Beschichtung, insbesondere deren Oberflächenbeschaffenheit und Flexibilität, aufweist. Die Trennmittelzusammensetzung kann daher beliebige Bindemittel B enthalten, ohne dass die Entformbarkeit des hergestellten Bauteils oder die hervorragenden Eigenschaften der mit der Zusammensetzung auf dem Bauteil hergestellten Beschichtung negativ beeinflusst werden. Zudem können die resultierenden Beschichtungen ohne aufwändige Nachbehandlungsschritte verklebt und/oder mit Basis- und/oder Klarlacken beschichtet werden.

Das mindestens eine Bindemittel B ist bevorzugt in einer Gesamtmenge (Feststoffgehalt) von 20 bis 50 Gew.-%, vorzugsweise von 25 bis 40 Gew.-%, insbesondere von 25 bis 35 Gew.-%, jeweils bezogen auf das Gesamtgewicht der Zusammensetzung, enthalten. Für die Berechnung der zuvor angeführten Gesamtmengen wird jeweils der Feststoffgehalt des Bindemittels berücksichtigt, falls es sich bei dem Bindemittel um eine Dispersion oder Lösung in einem Lösungsmittel handelt. Der Einsatz des mindestens einen Bindemittels B in den zuvor angeführten Mengenbereichen stellt die Ausbildung einer flexiblen und beständigen Beschichtung auf dem Bauteil sicher, ohne jedoch die Entformbarkeit des Bauteils negativ zu beeinflussen.

Erfindungsgemäß bevorzugt ist das Bindemittel B ausgewählt aus der Gruppe bestehend aus (i) Poly(meth)acrylaten, insbesondere hydroxyfunktionellen und/oder carboxylatfunktionellen und/oder aminfunktionellen Poly(meth)acrylaten, (ii) Polyurethanen, insbesondere hydroxyfunktionellen und/oder carboxylatfunktionellen und/oder aminfunktionellen Polyurethanen, (iii) Polyestern, insbesondere Polyesterpolyolen, (iv) Polyethern, insbesondere Polyetherpolyolen, (v) Mischpolymerisaten der genannten Polymere sowie (vi) deren Mischungen.

In diesem Zusammenhang ist es bevorzugt, wenn das Bindemittel B ausgewählt ist aus hydroxyfunktionellen Poly(meth)acrylaten und/oder Polyesterpolyolen, insbesondere aus einer Mischung mindestens eines hydroxyfunktionellen Poly(meth)acrylats und mindestens eines Polyesterpolyols. Der Einsatz dieser Mischung führt zu Beschichtungen, welche ein hohe Flexibilität sowie eine gute Beständigkeit gegen Umwelteinflüsse aufweisen. Zudem wird unabhängig von der Oberflächenbeschaffenheit des zur Herstellung des Bauteils verwendeten Materials eine glatte Oberfläche erreicht. Darüber hinaus lässt sich die erhaltene Beschichtung ohne aufwändige Nachbehandlung verkleben und/oder mit Basis- und/oder Klarlacken beschichten.

Vorzugsweise besitzt das mindestens eine hydroxyfunktionelle Poly(meth)acrylat eine Hydroxylzahl von 65 bis 100 mg KOH/g, bevorzugt von 70 bis 95 mg KOH/g, insbesondere von 75 bis 90 mg KOH/g oder von 80 bis 85 mg KOH/g. Die Hydroxylzahl lässt sich im Rahmen der vorliegenden Erfindung gemäß EN ISO 4629-2:2016 bestimmen und ist jeweils auf den Feststoffgehalt bezogen.

Das hydroxyfunktionelle Poly(meth)acrylat besitzt vorzugsweise eine Säurezahl kleiner 25 mg KOH/g, besonders bevorzugt eine Säurezahl von 1 bis 20 mg KOH/g, ganz besonders bevorzugt von 4 bis 16 mg KOH/g, insbesondere von 6 bis 14 mg KOH/g oder von 8 bis 12 mg KOH/g. Die Säurezahl lässt sich im Rahmen der vorliegenden Erfindung gemäß DIN EN ISO 2114:2002-06 (Verfahren A) bestimmen und ist jeweils auf den Feststoffgehalt bezogen.

Das zahlenmittlere Molekulargewicht Mₙ und das gewichtsmittlere Molekulargewicht M_{w} lassen sich mittels Gelpermeationschromatographie (GPC) unter Verwendung eines Polymethylmethacrylat-Standards (PMMA-Standard) bestimmen (DIN 55672-1:2016-03). Das zahlenmittlere Molekulargewicht Mₙ des hydroxyfunktionellen Poly(meth)acrylats liegt vorzugsweise in einem Bereich von 4.000 bis 10.000 g/mol, bevorzugt 5.000 bis 9.000 g/mol, besonders bevorzugt 5.500 bis 8.000 g/mol, insbesondere 6.000 bis 7.500 g/mol. Das gewichtsmittlere Molekulargewicht M_{w} des hydroxyfunktionellen Poly(meth)acrylats liegt vorzugsweise in einem Bereich von 8.000 bis 30.000 g/mol, bevorzugt 10.000 bis 25.000 g/mol, besonders bevorzugt 12.000 bis 22.000 g/mol, insbesondere 14.000 bis 20.000 g/mol. Die Polydispersität P_{D} (= M_{w}/Mₙ) des hydroxyfunktionellen Poly(meth)acrylats liegt vorzugsweise im Bereich von 2 bis 3, insbesondere von 2,2 bis 2,8.

Das hydroxyfunktionelle Poly(meth)acrylat besitzt vorzugsweise eine Hydroxylfunktionalität von 5 bis 15, bevorzugt von 6 bis 14, insbesondere von 8 bis 12.

Das hydroxyfunktionelle Poly(meth)acrylat lässt sich mittels der dem Durchschnittsfachmann geläufigen und gängigen Polymerisationsreaktionen aus ethylenisch ungesättigten, vorzugsweise monoethylenisch ungesättigten Monomeren erhalten. Als Initiatoren lassen sich Peroxide wie beispielsweise Di-tert.-Butylperoxid einsetzen. Es ist daher bevorzugt, wenn das hydroxyfunktionelle Poly(meth)acrylat herstellbar ist durch Umsetzung von
(a1) mindestens einem hydroxyfunktionellen (Meth)acrylsäureester, insbesondere (Meth)acrylsäureester der Formel HC=CR^{x}-COO-R^{y}-OH, worin R^{x} für H oder CH₃ steht und R^{y} für einen Alkylenrest mit 2 bis 6, vorzugsweise 2 bis 4, besonders bevorzugt 2 oder 3, Kohlenstoffatomen steht,
(a2) mindestens einem carboxyfunktionellen ethylenisch ungesättigten Monomer, insbesondere (Meth)acrylsäure, und
(a3) mindestens einem hydroxylgruppenfreien und carboxylgruppenfreien Ester der (Meth)acrylsäure und/oder mindestens einem hydroxylgruppenfreien und carboxylgruppenfreien Vinylmonomeren, insbesondere Styrol.

Die in dem hydroxyfunktionellen Poly(meth)acrylat enthaltenen Hydroxylgruppen werden über hydroxyfunktionelle ethylenisch ungesättigte Monomere (a1), vorzugsweise hydroxyfunktionelle Acrylsäureester und/oder hydroxyfunktionelle Methacrylsäureester, bei der Herstellung des hydroxyfunktionellen Poly(meth)acrylats eingeführt. Beispiele für hydroxyfunktionelle (Meth)acrylate sind Hydroxyethylmethacrylat, Hydroxyethylacrylat, Hydroxypropylmethacrylat und Hydroxypropylacrylat. Besonders bevorzugt sind Hydroxyethylmethacrylat und 2-Hydroxypropylmethacrylat enthalten. Die bei der Herstellung der hydroxyfunktionellen Poly(meth)acrylate eingesetzte Menge an hydroxyfunktionellen (Meth)acrylsäureestern (a1) bemisst sich am Zielbereich für die Hydroxylzahl von 50 bis 120 mg KOH/g.

Vorzugsweise enthält das hydroxyfunktionelle Poly(meth)acrylat geringe Mengen an Carboxylgruppen. Diese werden bei der Polymerisationsreaktion beispielsweise durch Einsatz carboxyfunktioneller Monomere (a2), besonders bevorzugt durch Einsatz von Arcylsäure und/oder Methacrylsäure, in das Poly(meth)acrylat eingeführt. Diese Monomere (a2), insbesondere (Meth)acrylsäure, sind vorzugsweise in einer Gesamtmenge von 20 bis 45 Gew.-%, bevorzugt von 25 bis 40 Gew.-%, insbesondere von 30 bis 35 Gew.-%, jeweils bezogen auf das Gesamtgewicht aller zur Herstellung des hydroxyfunktionellen Poly(meth)acrylats eingesetzten Monomere, enthalten.

Neben den hydroxyfunktionellen (a1) und den carboxyfunktionellen ethylenisch ungesättigten Monomeren (a1) werden auch ethylenisch ungesättigte, insbesondere monoethylenisch ungesättigte, Monomere (a3) bei der Herstellung des hydroxyfunktionellen Poly(meth)acrylats eingesetzt, wobei diese Monomere sowohl hydroxylgruppenfrei als auch carboxylgruppenfrei sind. Besonders bevorzugt wird als Vinylmonomer (a3) Styrol eingesetzt. Das Vinylmonomer (a3), insbesondere Styrol, ist bevorzugt einer Gesamtmenge von 30 bis 60 Gew.-%, vorzugsweise von 35 bis 55 Gew.-%, insbesondere von 40 bis 50 Gew.-%, jeweils bezogen auf das Gesamtgewicht aller zur Herstellung des hydroxyfunktionellen Poly(meth)acrylats eingesetzten Monomere, enthalten.

Das hydroxyfunktionelle Poly(meth)acrylat kann in einem organischen Lösemittel, vorzugsweise einem aprotischen Lösemittel eingesetzt werden. Ein typisches Lösemittel für diesen Zweck ist beispielsweise n-Butylacetat, welches auch bei der Herstellung des mindestens einen hydroxyfunktionellen Poly(meth)acrylats eingesetzt werden kann. Sollte das hydroxyfunktionelle Poly(meth)acrylat in einem Lösemittel eingesetzt werden, so zählt das Lösemittel selbstverständlich nicht zum Bestandteil, sondern wird dem Lösungsmittel L zugerechnet.

Bevorzugt wird das hydroxyfunktionelle Poly(meth)acrylat in einer bestimmten Gesamtmenge eingesetzt. Es ist daher erfindungsgemäß vorteilhaft, wenn das hydroxyfunktionelle Poly(meth)acrylat in einer Gesamtmenge von 10 Gew.-% bis 97 Gew.-%, vorzugsweise von 40 bis 70 Gew.-%, insbesondere von 40 bis 50 Gew.-%, jeweils bezogen auf das Gesamtgewicht des Festkörpers aller in der Zusammensetzung enthaltenen Bindemittel, enthalten ist.

Vorzugsweise besitzt das Polyesterpolyol eine Hydroxylzahl von 100 bis 200 mg KOH/g, bevorzugt von 110 bis 180 mg KOH/g, besonders bevorzugt von 120 bis 160 mg KOH/g, jeweils bezogen auf den Feststoffgehalt.

Die Säurezahl des Polyesterpolyols beträgt bevorzugt 0 bis 9 mg KOH/g, insbesondere 0,2 bis 2 mg KOH/g, jeweils bezogen auf den Feststoffgehalt. Die Bestimmung der Hydroxyl- sowie Säurezahl des Polyesterpolyols kann wie zuvor im Zusammenhang mit dem hydroxyfunktionellen Poly(meth)acrylat erfolgen.

Das zahlenmittlere Molekulargewicht des Polyesterpolyols liegt vorzugsweise im Bereich von 800 bis 3.000 g/mol, bevorzugt 1.000 bis 2.000 g/mol, insbesondere von 1.000 bis 1.600 g/mol. Die Bestimmung erfolgt hierbei wie im Zusammenhang mit der Bestimmung des Molekulargewichts für das hydroxyfunktionelle Poly(meth)acrylat.

Vorzugsweise ist das Polyesterpolyol verzweigt.

Bevorzugt besitzt das Polyesterpolyol eine Hydroxyfunktionalität von 2,2 bis 4, besonders bevorzugt von 2,5 bis 3,6, ganz besonders bevorzugt von 2,7 bis 3,6.

Bevorzugt wird das Polyesterpolyol in einer bestimmten Gesamtmenge eingesetzt. Es ist daher erfindungsgemäß vorteilhaft, wenn das Polyester-Polyol in einer Gesamtmenge von 40 Gew.-% bis 97 Gew.-%, vorzugsweise von 40 bis 70 Gew.-%, insbesondere von 50 bis 65 Gew.-%, jeweils bezogen auf das Gesamtgewicht des Festkörpers aller in der Zusammensetzung enthaltenen Bindemittel, enthalten ist.

Das Bindemittel B kann alternativ ausgewählt sein aus wässrigen anionisch stabilisierten Polyurethan-Dispersionen, wässrigen kationisch stabilisierten Polyurethan-Dispersionen, wässrigen Polyurethan-Polyharnstoff-Dispersionen sowie deren Mischungen. Geeignete Dispersionen sind beispielsweise in den Offenlegungsschriften EP 2 066 712 A1, EP 1 153 054 A1 sowie EP 1 153 052 A1 beschrieben.

### Trennmittelzusammensetzung - Vernetzungsmittel V (f):

Die Trennmittelzusammensetzung enthält neben den zuvor genannten Bestandteilen weiterhin ein Vernetzungsmittel V.

Bevorzugt ist das Vernetzungsmittel V ausgewählt aus der Gruppen bestehend aus Aminoplast-Harzen, Polyisocyanaten, blockierten Polyisocyanaten, Polycarbodiimiden, UV-Licht, Wärme, Photoinitiatoren sowie deren Mischungen.

Besonders bevorzugt werden Polyisocyanate sowie Polycarbodiimide als Vernetzungsmittel V eingesetzt.

Der Einsatz von Polyisocyanaten hat sich insbesondere dann bewährt, wenn als Bindemittel B eine Mischung des zuvor beschriebenen mindestens einen hydroxyfunktionellen Poly(meth)acrylats sowie des mindestens einen Polyester-Polyols in der erfindungsgemäßen Zusammensetzung enthalten ist.

In diesem Zusammenhang ist es besonders bevorzugt, wenn das Polyisocyanat eine NCO-Gruppenfunktionalität von größer 2,4 bis 5, vorzugsweise 2,6 bis 4, besonders bevorzugt 2,8 bis 3,6 besitzt.

Besonders bevorzugt werden im Rahmen der vorliegenden Erfindung Polyisocyanate eingesetzt, welche mindestens einen Isocyanurat-Ring oder mindestens einen Iminooxadiazindion-Ring enthalten.

Gemäß einer alternativen Ausführungsform können als Vernetzungsmittel V zwei voneinander verschiedene Polyisocyanate enthalten sein, wobei das erste Polyisocyanat mindestens einen Isocyanurat-Ring und das zweite Polyisocyanat mindestens einen Iminooxadiazindion-Ring enthält.

Bei dem Polyisocyanat handelt es sich vorzugsweise um Oligomere, vorzugsweise Trimere oder Tetramere von Diisocyanaten. Besonders bevorzugt handelt es sich um Iminooxadiazindione, Isocyanurate, Allophanate und/oder Biurete von Diisocyanaten. Besonders bevorzugt handelt es sich bei dem Polyisocyanat um aliphatische und/oder cycloaliphatische, ganz besonders bevorzugt aliphatische Polyisocyanate. Besonders bevorzugt dienen Hexamethylendiisocyanat und/oder Isophorondiisocyanat, ganz besonders bevorzugt nur Hexamethylendiisocyanat als Diisocyanat-Basis der oben genannten Oligomere, insbesondere der oben genannten Tri- oder Tetramere.

Der Einsatz von Polycarbodiimiden hat sich insbesondere dann bewährt, wenn als Bindemittel B wässrige anionisch stabilisierte Polyurethan-Dispersionen, wässrige kationisch stabilisierte Polyurethan-Dispersionen, wässrige Polyurethan-Polyharnstoff-Dispersionen sowie deren Mischungen in der erfindungsgemäßen Zusammensetzung enthalten sind.

Bevorzugt liegen die Polycarbodiimide als wässrige Dispersion vor. Besonders bevorzugt eingesetzte Polycarbodiimide sind erhältlich durch Umsetzung von Polyisocyanaten mit Polycarbodiimiden und anschließender Kettenverlängerung und/oder Terminierung mittels hydrophilen Verbindungen, enthaltend Hydroxyl- und/oder Amingruppen. Geeignete Dispersionen sind beispielsweise in den Offenlegungsschriften EP1644428 A2 und EP1981922 A2 beschrieben.

Durch das Vernetzungsmittel V lässt sich beispielsweise die Härte, Flexibilität und Elastizität der resultierenden gehärteten Beschichtung beeinflussen. Insbesondere die Verwendung Iminooxadiazindion-Strukturen enthaltender Polyisocyanate führt zu Beschichtungen mit besonderer Härte, wodurch verhindert wird, dass sich Substratstrukturen bis zur gehärteten Beschichtungsoberfläche fortpflanzen und dort eine unerwünschte Welligkeit auftritt. Derartige Polyisocyanate sind beispielsweise von der Firma Covestro unter der Bezeichnung Desmodur N3900 erhältlich. Ähnliche Resultate können mit Isocyanurat-Strukturen enthaltenden Polyisocyanaten, wie sie beispielsweise unter der Bezeichnung Desmodur N3800 von der Firma Covestro erhältlich sind, erreicht werden, wobei die Beschichtung weiterhin hart, jedoch flexibler ist.

Bevorzugt enthält die Zusammensetzung das mindestens eine Vernetzungsmittel V in einer bestimmten Gesamtmenge. Es ist daher erfindungsgemäß bevorzugt, wenn das mindestens eine Vernetzungsmittel V in einer Gesamtmenge von 10 Gew.-% bis 40 Gew.-%, vorzugsweise von 10 bis 30 Gew.-%, insbesondere von 15 bis 25 Gew.-%, jeweils bezogen auf das Gesamtgewicht der Zusammensetzung, enthalten ist.

Weiterhin ist es bevorzugt, wenn die Zusammensetzung ein bestimmtes molares Verhältnis der funktionellen Gruppen des Vernetzungsmittels V zu den gegenüber dem Vernetzungsmittel V reaktiven Gruppen des Bindemittels B enthält. Hierdurch wird sichergestellt, dass eine ausreichende Vernetzung der erfindungsgemäßen Zusammensetzung erfolgt. Es ist daher vorteilhaft, wenn das molare Verhältnis der funktionellen Gruppen des Vernetzungsmittels V, insbesondere der NCO- oder Carbodiimid-Gruppen, zu der Summe der gegenüber den funktionellen Gruppen des Vernetzungsmittels V reaktiven Gruppen des mindestens einen Bindemittels B, insbesondere Hydroxylgruppen oder anionische Gruppen, 0,4:1 bis 1:1, bevorzugt 0,65:1 bis 0,85:1, insbesondere 0,7:1 bis 0,8:1 beträgt.

Je nachdem welche Bindemittel B und Vernetzungsmittel V in der erfindungsgemäßen Zusammensetzung enthalten sind, ist die erfindungsgemäße Zusammensetzung als Einkomponenten-System ausgestaltet oder erhältlich durch Vermischen von zwei (Zweikomponenten-System) oder mehr Komponenten (Mehrkomponenten-System). In thermisch-chemisch härtbaren Einkomponenten-Systemen liegen die zu vernetzenden Komponenten, also Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C effektiv miteinander reagieren, um eine vorzeitige zumindest anteilige thermisch-chemische Härtung zu vermeiden. Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zwei- oder Mehrkomponenten-Systemen liegen die zu vernetzenden Komponenten, also Bindemittel und die Vernetzungsmittel, getrennt voneinander in mindestens zwei Komponenten vor, welche erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt. Die Vermischung kann manuell erfolgen, wobei in einem separaten Gefäß die entsprechende Menge an Komponente 1 oder 2 vorgelegt, mit der entsprechenden Menge an Komponente 2 oder 1 versetzt und anschließend vermischt wird. Es kann jedoch auch vorgesehen sein, dass die Vermischung der beiden Komponenten automatisch erfolgt, wobei dies im Rahmen der vorliegenden Erfindung bevorzugt ist. Eine bevorzugte Ausführungsform der vorliegenden Erfindung ist daher dadurch gekennzeichnet, dass das Vermischen der beiden Komponenten in einer automatischen Mischanlage erfolgt.

In diesem Zusammenhang ist es besonders bevorzugt, wenn die automatische Mischanlage eine Mischeinheit, insbesondere einen statischen Mischer, sowie mindestens zwei Vorrichtungen zur Zuführung der Stammlack-Komponente A und der Härter-Komponente B, insbesondere Zahnradpumpen und/oder Druckventile, aufweist. Bei dem statischen Mischer kann es sich um einen kommerziell erhältlichen Wendelmischer, der ca. 50 bis 100 cm vor dem Zerstäuber in die Materialversorgungsleitung eingebaut wird, handeln. Es werden bevorzugt 12 bis 18 Mischelemente (je Element 1 cm Länge, Durchmesser 6 bis 8 mm) verwendet, um eine adäquate Vermischung der beiden Komponenten zu erlangen. In Abhängigkeit der Mischenergie liegt die Topfzeit (Verdoppelung der Viskosität; Bestimmung gemäß DIN 53211) der Trennmittelzusammensetzung bei Einsatz der zuvor beschriebenen 12 bis 18 Mischelementen bei 10 bis 20 Minuten. Um eine Verstopfung der Materialversorgungsleitung zu vermeiden, ist es bevorzugt, wenn die Mischeinheit so programmiert wird, dass alle 7 bis 17 Minuten sowohl der Wendelmischer als auch die nachfolgende Schlauchleitung und der Zerstäuber mit der Stammlack-Komponente A gespült werden. Erfolgt die Applikation der Trennmittelzusammensetzung mittels Robotern, geschieht dieser Spülvorgang in einer zuvor definierten Ruheposition des Roboterkopfes. In Abhängigkeit der Länge der Schlauchleitung werden ca. 50 bis 200 ml in einen Auffangbehälter verworfen. Eine bevorzugte Alternative zu dieser Vorgehensweise ist die semikontinuierliche Förderung von gemischter Trennmittelzusammensetzung. Wird regelmäßig (alle 7 bis 17 min) Trennmittelzusammensetzung ausgedrückt (ebenfalls in einen Auffangbehälter), kann die Menge des zu verwerfenden Materials auf ein Minimum reduziert werden (ca. 10 bis 50 ml). Darüber hinaus kann es vorgesehen sein, die Schlauchleitung ab dem Mischer bis zum Zerstäuber sowie den Zerstäuber zu spülen. Dieser Spülvorgang ist insbesondere nach längerem Stillstand der Anlage oder zum Ende einer Schicht bevorzugt, um auf diese Weise eine lange Lebensdauer des Equipments und eine kontinuierliche Qualität der Trennmittelzusammensetzung zu gewährleisten.

Grundsätzlich ist auch die Nutzung einer Dreikomponentenmischanlage möglich. Diese kann hinsichtlich der Lagerstabilitäten von bereits katalysierten Systemen zu Vereinfachungen führen, ohne dabei einen höheren verfahrenstechnischen Aufwand zu erzeugen.

Vorzugsweise besitzen die beiden Komponenten sowohl bei der manuellen Vermischung als auch bei der Zuführung der Komponenten zur automatischen Vermischung jeweils Temperaturen von 15 bis 70 °C, besonders bevorzugt 15 bis 40 °C, insbesondere 20 bis 30 °C.

Ist die erfindungsgemäße Zusammensetzung erhältlich durch Vermischen von zwei oder mehr Komponenten, so beträgt das Gewichtsverhältnis der Bindemittel-haltigen Komponente zu der Vernetzer-haltigen Komponente bevorzugt 100 : 10 bis 100 : 100, vorzugsweise von 100 : 20 bis 100 : 80, insbesondere von 100 : 50 bis 100 : 70.. Die Verwendung der zuvor beschriebenen Mischungsverhältnisse stellt eine ausreichende Vernetzung der Trennmittelzusammensetzung sicher und gewährleistet auf diese Weise eine gute Entformbarkeit sowie eine hohe Haftung auf der Oberfläche des hergestellten Bauteils.

### Trennmittelzusammensetzung - Vernetzungskatalysator VK (g):

Weiterhin kann es erfindungsgemäß vorteilhaft sein, wenn die Trennmittelzusammensetzung mindestens einen Vernetzungskatalysator VK enthält. Der Vernetzungskatalysator VK ist insbesondere dann enthalten, wenn die Zusammensetzung mindestens ein Vernetzungsmittel V, insbesondere Polyisocyanate, enthält.

Der Vernetzungskatalysator VK dient in erster Linie der Katalyse der Reaktion zwischen den funktionellen Gruppen des Vernetzungsmittels V und den reaktiven Gruppen des mindestens einen Bindemittels B.

Der Vernetzungskatalysator ist bevorzugt ausgewählt aus der Gruppe der Bismutcarboxylate.

In diesem Zusammenhang ist es bevorzugt, wenn spezielle Bismutcarboxylate enthalten sind. Die Bismutcarboxylate besitzen daher vorzugsweise die allgemeine Formel (III)

Bi[OOC(CₙH₂ₙ₊₁)]₃ (III)

mit n = 5 bis 15, vorzugsweise n = 7 bis 13, insbesondere n = 9 bis 11.

Vorzugsweise sind die Carboxylat-Reste verzweigt und ganz besonders bevorzugt weisen diese in alpha-Position zum Kohlenstoffatom der Carboxylatgruppe ein tertiäres oder quaternäres, vorzugsweise quaternäres Kohlenstoffatom auf. Unter den Bismutcarboxylaten hat sich insbesondere Bismuttrineodecanoat als ganz besonders geeignet herausgestellt.

Die Bismutcarboxylate werden bevorzugt in Kombination mit der dem Carboxyat zugrundeliegenden Carbonsäure HOOC(CₙH₂ₙ₊₁) stabilisiert eingesetzt, worin n die oben angegebene Bedeutung besitzt. Die freie Carbonsäure ist dabei formell im Rahmen dieser Erfindung nicht als Bestandteil des Vernetzungskatalysators VK anzusehen, selbst wenn diese neben der Stabilisatorwirkung gegebenenfalls als Promotor der Katalyse dienen kann, sondern zählt zu den weiteren Additiven wie sie unten beschrieben werden.

Bevorzugt enthält die Zusammensetzung den mindestens eine Vernetzungskatalysator VK in einer bestimmten Gesamtmenge. Es ist daher erfindungsgemäß bevorzugt, wenn den mindestens einen Vernetzungskatalysator VK in einer Gesamtmenge von 0,01 Gew.-% bis 3,5 Gew.-%, vorzugsweise von 0,1 bis 2 Gew.-%, insbesondere von 0,4 bis 1,5 Gew.-%, jeweils bezogen auf das Gesamtgewicht der Zusammensetzung, enthalten ist.

### Trennmittelzusammensetzung - Basisfarbe BF (h):

Die Trennmittelzusammensetzung kann weiterhin mindestens eine Basisfarbe BF enthalten. Unter Basisfarbe BF ist hierbei Farbe mit genau festgelegtem Farbton zu verstehen. Die mindestens eine Basisfarbe BF ist insbesondere dann enthalten, wenn eine farbige Beschichtung auf dem Bauteil erzielt werden soll. Durch Einsatz der mindestens einen Basisfarbe BF kann eine hohe Farbtongenauigkeit erzielt werden. Zudem ist eine hohe Farbtonvielfalt möglich, da verschiedene Basisfarben BF mit unterschiedlichen Farbtönen miteinander vermischt werden können, um den gewünschten Farbton zu erreichen.

Die mindestens eine Basisfarbe BF ist bevorzugt in einer bestimmten Gesamtmenge in der Trennmittelzusammensetzung enthalten. Es ist daher erfindungsgemäß vorteilhaft, wenn die Trennmittelzusammensetzung die mindestens eine Basisfarbe BF in einer Gesamtmenge von 5 bis 40 Gew.-%, insbesondere von 10 bis 20 Gew.-%, bezogen auf das Gesamtgewicht der Zusammensetzung, enthält. Der Einsatz der mindestens einen Basisfarbe BF in den zuvor angeführten Gesamtmengen stellt eine hohe Farbtonintensität sicher.

Besonders bevorzugt enthält die mindestens eine Basisfarbe BF mindestens ein Effektpigment und/oder mindestens ein farbgebendes Pigment.

Unter Effektpigmente werden Pigmente verstanden, welche einen dekorativen Effekt in Lacküberzügen bewirken und zusätzlich, jedoch nicht ausschließlich, einen farbgebenden Effekt bewirken können. Die Effektpigmente zeichnen sich insbesondere durch einen plättchenartigen Aufbau aus. Bevorzugte Effektpigmente sind beispielsweise plättchenförmige Metalleffektpigmente wie plättchenförmige Aluminiumpigmente, Goldbronzen, feuergefärbte Bronzen und/oder Eisenoxid-Aluminiumpigmente, Perglanzpigmente und/oder Metalloxid-Glimmer-Pigmente und/oder sonstige Effektpigmente wie plättchenförmiges Graphit, plättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere plättchenförmige Aluminiumpigmente und/oder beschichtete Metalloxid-Glimmer-Pigmente und/oder mit Metalloxiden beschichtete Borosilicate.

Beispiele für anorganische farbgebende Pigmente sind Weißpigmente wie Titandioxid; Schwarzpigmente wie Ruß, Eisen-Mangan-Schwarz oder Spinellschwarz; Buntpigmente wie Ultramaringrün, Ultramarinblau oder Manganblau, Ultramarinviolett oder Manganviolett, Eisenoxidrot, Molybdatrot oder Ultramarinrot; Eisenoxidbraun, Mischbraun, Spinell- und Korundphasen; oder Eisenoxidgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Das mindestens eine Effektpigment und/oder das mindestens eines farbgebenden Pigments ist bevorzugt in einer Gesamtmenge von 0,5 bis 70 Gew.-%, bezogen auf das Gesamtgewicht der Basisfarbe BF, enthalten.

Weiterhin kann es vorgesehen sein, dass die Basisfarbe mindestens ein Bindemittel enthält. Dieses Bindemittel dient der stabilen Dispergierung des Pigments und stellt auf diese Weise eine hohe Farbtonintensität und Farbtonhomogenität der Basisfarbe BF sicher.

Als Bindemittel werden bevorzugt Polyurethanpolymere, insbesondere anionisch stabilisierte Polyurethanpolymere, in der Basisfarbe BF eingesetzt. Unter anionisch stabilisierten Polyurethanpolymeren werden Polyurethanpolymere verstanden, welche mindestens eine Gruppe, welche durch Neutralisationsmittel in eine anionische Gruppe überführt werden kann (potentiell anionische Gruppe), enthalten. Bei den potentiell anionischen Gruppen, welche durch Neutralisationsmittel in anionische Gruppen überführt werden können, handelt es sich beispielsweise um Carbonsäure-, Sulfonsäure- und/oder Phosphonsäuregruppen, insbesondere Carbonsäuregruppen.

Die Polyurethanpolymere sind erhältlich durch Umsetzung eines isocyanatgruppenhaltigen Präpolymers mit gegenüber Isocyanatgruppen reaktiven Verbindungen. Die Umsetzung der Komponenten erfolgt bevorzugt in den üblichen und bekannten organischen Lösemitteln. Die Menge an organischen Lösemitteln kann dabei in weiten Grenzen variieren und sollte zur Bildung einer Präpolymerlösung mit geeigneter Viskosität ausreichen. Im Allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 bis 15 Gew.-%, bezogen auf den Festkörper, durchgeführt werden.

Derartige Polyurethanpolymere weisen bevorzugt ein zahlenmittleres Molekulargewicht (Bestimmung: gelpermeationschromatographisch mit Polystyrol als Standard) von 1.000 bis 30.000 g/mol, vorzugsweise von 1.500 bis 20.000 g/mol, sowie eine Säurezahl von 5 bis 70 mg KOH/g, vorzugsweise von 10 bis 30 mg KOH/g (bezogen auf den Feststoffgehalt) auf und sind durch Umsetzung, vorzugsweise Kettenverlängerung, von Isocyanatgruppen aufweisenden Präpolymeren herstellbar.

Die Herstellung des isocyanatgruppenhaltigen Präpolymeren kann durch Reaktion von Polyolen mit einer Hydroxylzahl von 10 bis 1.800, bevorzugt 50 bis 1.200 mg KOH/g (bezogen auf den Feststoffgehalt), mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des NCO-Präpolymeren eingesetzten Polyole können niedermolekular und/oder hochmolekular sein. Für die Herstellung von anionisch stabilisierten Polyurethanpoylmeren enthalten die Polyole mindestens eine anionische bzw. zur Anionenbildung befähigte Gruppe. Es können auch niedermolekulare Polyole mit einem Molekulargewicht von 60 bis zu 400 Dalton, zur Herstellung der isocyanatgruppenhaltigen Präpolymere mitverwendet werden.

Um ein NCO-Präpolymer mit hoher Flexibilität zu erhalten, sollte ein hoher Anteil eines überwiegend linearen Polyols mit einer bevorzugten OH-Zahl von 30 bis 150 mg KOH/g (bezogen auf den Feststoffgehalt) zugesetzt werden. Bis zu 97 Gew.-% des gesamten Polyols können aus gesättigten und ungesättigten Polyestern mit einer zahlenmittleren Molekulargewicht Mₙ von 400 bis 5.000 Dalton bestehen.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Besonders bevorzugt wird ein linearer Polyester eingesetzt, welcher durch Umsetzung von aliphatischen und aromatischen Dicarbonsäuren mit aliphatischen Diolen erhältlich ist.

Neben dem Polyester werden zur Herstellung des NCO-Präpolymers weitere Polyole eingesetzt, wobei mindestens ein Polyol eine Carboxyl-, Sulfonsäure- und/oder Phosphonsäuregruppen aufweist. Vorzugsweise werden Alkansäuren mit zwei Hydroxylgruppen am alpha-ständigen Kohlenstoffatom eingesetzt. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltende Polyol kann 3 bis 100 Gew.-%, vorzugsweise 5 bis 50 Gew.-%, des gesamten Polyolbestandteils im NCO-Präpolymeren ausmachen.

Die durch die Carboxylgruppenneutralisation in Salzform verfügbare Menge an ionisierbaren Carboxylgruppen beträgt wenigstens 0,4 Gew.-%, vorzugsweise wenigstens 0,7 Gew.-%, bezogen auf den Feststoff des NCO-Präpolymers. Die obere Grenze beträgt etwa 12 Gew.-%. Die Menge an Dihydroxyalkansäuren im unneutralisierten Präpolymer ergibt eine Säurezahl von 10 mg KOH/g bis 40 mg KOH/g (bezogen auf den Feststoffgehalt).

Weitere Polyole, welche keine Carboxyl-, Sulfonsäure- und/oder Phosphonsäuregruppen aufweisen, sind bevorzugt ausgewählt aus C₃-C₈-Alkandiolen, insbesondere aus 1,6-Hexandiol. Diese Diole werden üblicherweise in einer Menge von 0,5 bis 15 Gew.-%, bevorzugt 1 bis 7 Gew.-% eingesetzt, jeweils bezogen auf das Gesamtgewicht der zur Herstellung der anionisch stabilisierten Polyurethanpolymere eingesetzten Aufbaukomponenten.

Als typische multifunktionelle Isocyanate zur Herstellung der anionischen Polyurethanpolymere werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren eingesetzte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat, Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher anionischer Polyurethanpolymerdispersionen werden insbesondere Diisocyanate der allgemeinen Formel (IV) eingesetzt, 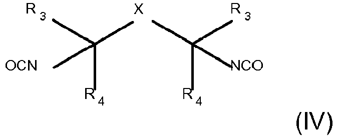 wobei X für einen zweiwertigen cyclischen und gegebenenfalls aromatischen Kohlenwasserstoffrest, vorzugsweise für einen ggf. Halogen-, Methyl- oder Methoxysubstituierten Dicyclohexylmethyl-, Naphthylen-, Diphenylen- oder 1,2-, 1,3- oder 1,4-Phenylenrest, besonders bevorzugt für einen Dicyclohexylmethylrest und R³ und R₄ für Wasserstoff oder einen Alkylrest mit 1 bis 4 C-Atomen, bevorzugt für Wasserstoff, stehen. Ein im Rahmen der vorliegenden Erfindung besonders bevorzugt eingesetztes Diisocyanat der Formel (IV) ist 4,4'-Methylendicyclohexyldiisocyanat (auch als H₁₂MDI bezeichnet).

Das NCO-Präpolymer enthält wenigstens 0,5 Gew.-% Isocyanatgruppen, vorzugsweise wenigstens 1 Gew.-% NCO, bezogen auf den Feststoff. Die obere Grenze liegt bei 15 Gew.-%, vorzugsweise 10 Gew.-%, besonders bevorzugt bei 5 Gew.-% NCO.

Die Isocyanatgruppen des isocyanatgruppenhaltigen Präpolymers werden mit einem Modifizierungsmittel oder Kettenverlängerungsmittel umgesetzt. Das Modifizierungsmittel wird dabei vorzugsweise in einer solchen Menge zugegeben, dass es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyamine und/oder Polyole, eingesetzt. Als Beispiele für einsetzbare Polyamine werden Ethylendiamin, Trimethylendiamin, Tetramethylendiamin, Pentamethylendiamin, Hexamethylendiamin oder Diethylentriamin genannt. Als Beispiele für einsetzbare Polyole werden Trimethylolpropan, 1,3,4-Butantriol, Glycerin, Erythrit, Mesoerythrit, Arabit, Adonit usw. genannt. Bevorzugt wird Trimethylolpropan eingesetzt. Das Äquivalentverhältnis von NCO- Präpolymer zu Modifizierungsmittel liegt bevorzugt zwischen 2,0 : 1,0 und 1,0 : 2,0, insbesondere zwischen 1,1 : 1 und 1 : 1,1.

Im Rahmen der vorliegenden Erfindung ist das anionisch stabilisierte Polyurethanpolymer besonders bevorzugt erhältlich durch Umsetzung eines NCO-Präpolymers mit einem Modifizierungsmittel in Form eines Polyols, insbesondere Trimethylolpropan, wobei das NCO-Präpolymer erhältlich ist durch Umsetzung von
(i) 55 bis 70 Gew.-%, bezogen auf das Gesamtgewicht der Verbindungen (i) bis (iv), mindestens eines Polyesterpolyols mit einer OH-Zahl von 40 bis 100 mg KOH/g, bezogen auf den Feststoffgehalt, und einem zahlenmittleren Molekulargewicht Mₙ von 1.000 bis 3.000 Da, wobei das Polyesterpolyol bevorzugt keine olefinischen Doppelbindungen enthält,
(ii) 3 bis 7 Gew.-%, bezogen auf das Gesamtgewicht der Verbindungen (i) bis (iv), mindestens einer Alkansäure mit 3 bis 8 Kohlenstoffatomen sowie zwei Hydroxylgruppen am alpha-ständigen Kohlenstoffatom, insbesondere Dimethylolpropionsäure,
(iii) 0,5 bis 3 Gew.-%, bezogen auf das Gesamtgewicht der Verbindungen (i) bis (iv), mindestens eines Ca-Cs-Alkandiols, insbesondere 1,6-Hexandiol, und
(iv) 25 bis 30 Gew.-%, bezogen auf das Gesamtgewicht der Verbindungen (i) bis (iv), mindestens einem Diisocyanat der Formel (IV) mit X = Dicyclohexylmethylrest und R₃ = R₄ = Wasserstoff.

Das Äquivalentverhältnis von NCO-Präpolymer zu Modifizierungsmittel beträgt bevorzugt zwischen 2,0 : 1,0 und 1,0 : 2,0, insbesondere zwischen 1,1 : 1 und 1 : 1,1.

Das anionisch stabilisierte Polyurethanpolymer wird mit einer Base, bevorzugt mit einer organischen Base, insbesondere mit N-N'-Dimethylethanolamin, neutralisiert, wobei die Base in einer Menge zugegeben wird, dass ein Neutralisationsgrad von 50 bis 100 %, bevorzugt von 60 bis 80% erreicht wird.

Das mindestens eine Bindemittel, insbesondere das zuvor genannte anionisch stabilisierte Polyurethanpolymer, ist bevorzugt in einer Menge von 10 bis 80 Gew.-%, bezogen auf das Gesamtgewicht der Basisfarbe BF, enthalten.

Die Basisfarbe BF kann zudem mindestens ein Lösemittel enthalten. Als Lösemittel können die bereits zuvor im Zusammenhang mit dem Lösungsmittel L (Komponente (a) der erfindungsgemäßen Zusammensetzung) genannten eingesetzt werden. Besonders bevorzugt wird Butyglycol und/oder Methylethylketon eingesetzt.

Eine besonders bevorzugte Ausführungsform der Basisfarbe BF ist daher dadurch gekennzeichnet, dass die Basisfarbe BF, bezogen auf ihr Gesamtgewicht,
(a1) 0,5 bis 70 Gew.-% mindestens eines Effektpigments und/oder mindestens eines farbgebenden Pigments,
(a2) 10 bis 80 Gew.-% mindestens eines Bindemittels, ausgewählt aus der Gruppe von Polyurethanpolymeren, Aminoplastpolymeren, Polyacrylatpolymeren, Polyesterpolymeren sowie deren Mischungen, insbesondere eines zuvor angeführten anionisch stabilisierten Polyurethanpolymers, und
(a3) mindestens ein organisches Lösemittel enthält.

### Trennmittelzusammensetzung - Weitere Bestandteile (i)

Neben den zuvor angeführten Bestandteilen kann die erfindungsgemäß verwendete Trennmittelzusammensetzung weitere Bestandteile enthalten. Beispiele für weitere Bestandteile sind Additive.

Das mindestens eine Additiv ist bevorzugt ausgewählt aus der Gruppe bestehend aus Netz- und/oder Dispergiermitteln, Rheologiehilfsmitteln, Verlaufsmitteln, UV-Absorbern sowie deren Mischungen.

Bevorzugt ist das mindestens eine Additiv in einer Gesamtmenge von 0 Gew.-% bis 10 Gew.-%, bezogen auf das Gesamtgewicht der Zusammensetzung, enthalten.

### Verfahrensschritt (B):

In Verfahrensschritt B des erfindungsgemäßen Verfahrens wird die in Schritt (A) applizierte Trennmittelzusammensetzung abgelüftet. Wie bereits zuvor ausgeführt, erfolgt in diesem Schritt jedoch keine Vernetzung bzw. Härtung dieser Zusammensetzung. Erfindungsgemäß bevorzugt erfolgt das Ablüften der Trennmittelzusammensetzung in Verfahrensschritt (B) für einen Zeitraum von 20 Sekunden bis 120 Minuten, vorzugsweise von 20 Sekunden bis 2 Minuten, insbesondere von 25 Sekunden bis 45 Sekunden. Die extrem kurze Ablüftzeit der Trennmittelzusammensetzung spart im Bereich der Ablüftzone Zeit. In einer besonders bevorzugten Ausführungsform werden Ablüftzeiten von lediglich 25 bis 45 Sekunden benötigt, bevor die weiteren Verfahrensschritte durchgeführt werden können. Dadurch ist eine Produktionssteigerung möglich.

Die Trennmittelzusammensetzung wird in Schritt (A) vorzugsweise in einer solchen Menge appliziert, dass eine bestimmte Trockenschichtdicke nach dem Ablüften in Schritt (B) erhalten wird. Daher ist es bevorzugt, wenn die Trockenschichtdicke der abgelüfteten Trennmittelzusammensetzung in Verfahrensschritt (B) 20 bis 120 µm, insbesondere 25 bis 100 µm, beträgt. Hierdurch wird sichergestellt, dass die auf dem Bauteil erzeugte Beschichtung einen guten Schutz des Bauteils gegen mechanische Beanspruchung sowie Einwirkung von Umwelteigenschaften aufweist.

Um das Ablüften der Trennmittelzusammensetzung zu beschleunigen, ist es vorteilhaft, wenn das Formwerkzeug aufgeheizt wird. Vorzugsweise erfolgt das Ablüften der Trennmittelzusammensetzung in Verfahrensschritt (B) bei einer Temperatur von 20 bis 100 °C, besonders bevorzugt 30 bis 90 °C, ganz besonders bevorzugt 40 bis 80 °C, insbesondere 50 bis 70 °C. Die zuvor genannten Temperaturen führen zu einem schnellen Verdampfen der in der Trennmittelzusammensetzung enthaltenen Lösungsmittel sowie zu einer Filmbildung auf der Oberfläche der Innenseiten der Formteile des Formwerkzeugs. Jedoch erfolgt bei diesen Temperaturen keine ausreichende Vernetzung bzw. Härtung der Trennmittelzusammensetzung. Auf diese Weise wird gewährleistet, dass keine Verschlechterung der Haftung zwischen der Trennmittelschicht und den in den weiteren Schritten verwendeten Materialen (M1) und Zusammensetzungen (Z1, Z2) auftritt. Denn die hohe Haftung der durch das Trennmittel erzeugten Beschichtung auf der Oberfläche des Bauteils wird durch gleichzeitige Vernetzung des Trennmittels und der Zusammensetzung, welche das Bauteil bildet, erreicht.

### Verfahrensschritt (C):

Dieser Verfahrensschritt ist optional und muss somit nicht zwangsläufig durchgeführt werden. Wird dieser Schritt durchgeführt, so wird mindestens ein Material M1 eingelegt und das Formwerkzeug erhitzt, um das eingelegte Material zu aktivieren. Besonders bevorzugt handelt es sich bei dem in Verfahrensschritt (C) eingelegten Material M1 um eine Außensohle, insbesondere eine Außensohle aus thermoplastischem Polyurethan. Thermoplastische Polyurethane können durch Reaktion hochmolekularer Polyole, wie Polyesterpolyole und Polyetherpolyole, mit einem zahlenmittleren Molekulargewicht von 500 bis 10.000 g/mol mit Diisocyanaten sowie niedrigmolekularen Diolen (Mₙ 50 bis 499 g/mol) hergestellt werden. Es ist jedoch auch möglich, Außensohlen aus anderen Materialien, beispielsweise Gummi, Kautschuk sowie Mischungen aus Gummi und Kunststoffen, einzusetzen.

Insbesondere bei Verwendung von thermoplastischen Materialien M1 ist es von Vorteil, wenn das Formwerkzeug in Verfahrensschritt (C) erhitzt wird, um das Material verformbar zu machen und auf diese Weise an die Formteile des Formwerkzeugs anzupassen. Es ist daher bevorzugt, wenn das Formwerkzeug in Verfahrensschritt (C) auf 20 bis 100 °C, besonders bevorzugt 30 bis 90 °C, ganz besonders bevorzugt 40 bis 80 °C, insbesondere 50 bis 70 °C, erhitzt wird. Das Erhitzen des Formwerkzeugs kann durch Zuführung von Wärme oder durch Bestrahlung, beispielsweise mit IR-Strahlung, erfolgen. Bevorzugt erfolgt die Erhitzung des Formwerkzeugs mittels IR-Strahlung.

Darüber hinaus kann es erfindungsgemäß vorgesehen sein, dass Formwerkzeug nach einlegen des mindestens einen Materials M1 zu verschließen, anschließend zu Erhitzen und hieran anschließend wieder zu öffnen.

### Verfahrensschritt (D):

In Verfahrensschritt (D) wird in das geöffnete Formwerkzeug, welches gegebenenfalls das zuvor eingelegte Material (M1) enthält, eine Zusammensetzung Z1 appliziert.

Bei der Zusammensetzung Z1 handelt es sich um eine vernetzbare Zusammensetzung. Folglich muss die Zusammensetzung entweder selbstvernetzend sein, oder die Zusammensetzung muss entsprechende Vernetzungsmittel enthalten. Besonders bevorzugt handelt es sich bei der in Verfahrensschritt (D) applizierten Zusammensetzung Z1 um einen Polymerschaum, insbesondere einen Polyurethanschaumstoff.

Zu den Polymerschäumen zählen hierin unter anderem elastomere Schaumstoffe, insbesondere Weichschaumstoffe, aber auch duroplastische Schaumstoffe, insbesondere Hartschaumstoffe. Die Schaumstoffe können offenzellig, geschlossenzellig oder gemischtzellig sein. Auch sogenannte Integralschaumstoffe werden hierin zu den Schaumstoffen gezählt.

Besonders bevorzugte Schaumstoffe sind Polyurethanschaumstoffe. Diese werden üblicherweise aus einem oder mehreren Polyolen und einem oder mehreren Polyisocyanaten hergestellt. Als Treibmittel zur Schaumbildung wird der Polyolkomponente zumeist Wasser zugegeben, welches mit einem Teil des Polyisocyanats unter Kohlendioxidbildung, und somit unter Aufschäumung reagiert. Unter Verwendung langkettiger Polyole werden weiche bis elastischer Schaumstoffe, insbesondere Weichschaumstoffe, erhalten. Werden kurzkettige Polyole verwendet, so entstehen stark vernetzte Strukturen, was in der Regel zur Bildung von Hartschaumstoffen führt. Die zur Herstellung der Polyurethanschaumstoffe verwendeten Polyole umfassen vorzugsweise Polyesterpolyole, Polyetherpolyole und/oder Polyester-Polyether-Polyole und werden entsprechend bevorzugt aus der Gruppe der vorgenannten Polyole gewählt.

Den Schaumstoff-Formulierungen können auch Fasern zugemischt werden. Werden solche Formulierungen aufgeschäumt, so entstehen sogenannte faserverstärkte Schaumstoffe. Fasern werden vorzugsweise bei der Herstellung von Hartschäumen eingesetzt.

Die Applikation kann mittels grundsätzlich bekannter Vorrichtungen erfolgen. Besonders bevorzugt wird die Zusammensetzung Z1 in Verfahrensschritt (D) automatisch appliziert.

Es kann erfindungsgemäß vorgesehen sein, die Zusammensetzung Z1 in mehreren Stufen in das Formwerkzeug einzuspritzen. Dies wird insbesondere dann durchgeführt, wenn die Sohlenform des Formwerkzeugs in mehrere Felder unterteilt ist. In diesem Fall wird die Zusammensetzung Z1 in einer ersten Stufe in das erste Feld und in einer zweiten Stufe in das zweite Feld gespritzt. Dieses Verfahren wird beispielsweise dann angewendet, wenn das erste Feld eine Laufsohle und das zweite Feld ein in sich geschlossener Sohlenrahmen darstellen. In diesem Fall wird die Zusammensetzung Z1 zunächst in den Formenraum für die Sohle und anschließend in den Formenraum des in sich geschlossenen Sohlenrahmen eingespritzt.

### Verfahrensschritt (E):

In Verfahrensschritt (E) des erfindungsgemäßen Verfahrens wird das Formwerkzeug manuell verschlossen. Das Verschließen kann hierbei hydraulisch oder über mechanische Verschlüsse erfolgen.

### Verfahrensschritt (F):

In Verfahrensschritt (F) des erfindungsgemäßen Verfahrens erfolgt die Vernetzung der Zusammensetzung Z1 sowie der zuvor eingebrachten Trennmittelzusammensetzung. Durch die zeitgleiche Vernetzung der beiden Zusammensetzungen wird eine hohe Haftung der vernetzten Trennmittelbeschichtung auf der gehärteten Zusammensetzung Z1 erreicht und hierdurch die mechanischen und optischen Eigenschaften des erhaltenen beschichteten Bauteils verbessert.

Um eine Vernetzung zu erreichen, wird der Verfahrensschritt (F) bevorzugt bei erhöhten Temperaturen durchgeführt. Es ist daher vorteilhaft, wenn die Vernetzung in Verfahrensschritt (F) bei Temperaturen von 45 bis 75 °C, vorzugsweise 50 bis 70 °C, insbesondere 52 bis 65 °C, stattfindet.

Vorzugsweise erfolgt die Vernetzung in Verfahrensschritt (F) für einen Zeitraum von 1 bis 20 Minuten, vorzugsweise von 3 bis 15 Minuten, insbesondere von 4 bis 10 Minuten. Derartige Zeiträume stellen eine ausreichende Vernetzung der Trennmittelzusammensetzung sowie der Zusammensetzung Z1 sicher und erlauben daher auch eine einfache Entformbarkeit der beschichten und gehärteten Zusammensetzung Z1.

### Verfahrensschritt (G):

Es kann erfindungsgemäß vorgesehen sein, mindestens eine weitere Zusammensetzung Z2 zu applizieren und ebenfalls zu vernetzen. Vorzugsweise handelt es sich bei der in Verfahrensschritt (G) applizierten Zusammensetzung Z2 um einen Polymerschaum, insbesondere einen Polyurethanschaumstoff, welcher bevorzugt verschieden ist von der Zusammensetzung Z1. Dieser Verfahrensschritt kann beliebig oft wiederholt werden. Folglich können auch noch weitere Zusammensetzungen Z3, Z4 usw. appliziert werden, welche bevorzugt ebenfalls unterschiedlich zueinander sind. Die Zusammensetzungen können sich beispielsweise in der Dichte, in der Farbe oder im verwendeten Material unterscheiden. Auf diese Weise können mehrschichtige Sohlen aus Kunststoff hergestellt werden, wobei die Anpassung der Eigenschaften der Sohlen durch die Auswahl der Zusammensetzungen Z1, Z2 usw. erfolgt. Wird dieser Schritt durchgeführt, werden die Teile des Formwerkzeugs vor Injektion der Zusammensetzung Z2 vorzugsweise derart bewegt, dass in dem Formwerkzeug ein Hohlraum gebildet wird, in welchen die Zusammensetzung Z2 eingespritzt wird. Dies kann beispielsweise durch Bewegung des Bodenstempels oder des das Formwerkzeug nach oben verschließenden Formteils erfolgen.

Die Härtung bzw. Vernetzung der in Schritt (G) applizierten Zusammensetzungen erfolgt wie zuvor für den Verfahrensschritt (F) beschrieben.

### Verfahrensschritt (H):

In Verfahrensschritt (H) des erfindungsgemäßen Verfahrens wird das Formwerkzeug manuell geöffnet. Es kann erfindungsgemäß vorgesehen sein, dass vor Öffnung des Formwerkzeugs die Position mindestens eines Formteils des Formwerkzeugs insbesondere hydraulisch verändert wird. Weiterhin kann es vorgesehen sein, dass vor Öffnung des Formwerkzeugs Verschlussmechanismen zum Verschließen des Formwerkzeugs geöffnet werden müssen.

### Verfahrensschritt (I):

In Verfahrensschritt (I) des erfindungsgemäßen Verfahrens wird das geformte und beschichtete Bauteil manuell entnommen. Die Entnahme des Bauteils kann unter Verwendung von Hilfsmitteln erfolgen.

### Verfahrensschritt (J):

Nach Entnahme des beschichteten Bauteils kann es erfindungsgemäß vorgesehen sein dieses nachzubehandeln. Vorzugsweise handelt es sich bei der Nachbehandlung (J) um eine Entgratung und/oder Polierung und/oder Lackierung des hergestellten beschichteten Bauteils. Das hergestellte beschichtete Bauteil kann, wenn gewünscht, ohne Schleifvorgang, gegebenenfalls nach einer einfachen Reinigung, direkt mit weiteren Beschichtungsmitteln wie beispielsweise einem oder mehreren Basislacken und einem oder mehreren Klarlacken unter Ausbildung einer oder mehrerer Basislackschichten beziehungsweise einer oder mehrerer Klarlackschichten beschichtet werden. Vorzugsweise wird auf das hergestellte Bauteil keine Füllerschicht aufgebracht, sondern direkt eine Basislackschicht oder eine Decklackschicht, insbesondere eine Klarlackschicht. Hierbei kann es vorgesehen sein, dass die Basislackschicht(en) und die Klarlackschicht(en) getrennt oder gemeinsam gehärtet werden.

Als Basislacke und Decklacke, insbesondere Klarlacke können prinzipiell alle konventionell in der Lackierung eingesetzten Basislacke beziehungsweise Klarlacke verwendet werden. Derartige Basislacke und Klarlacke sind beispielsweise von der BASF Coatings GmbH erhältlich, wobei sich als Klarlacke insbesondere Klarlacke der EverGloss-Produktlinie besonders bewährt haben.

### Weitere Verfahrensschritte:

Es kann erfindungsgemäß vorgesehen sein, dass das Verfahren neben den zwingenden Verfahrensschritten (A), (B) und (D) bis (I) sowie den optionalen Verfahrensschritten (C) und (J) weitere Verfahrensschritte umfasst. Bevorzugt umfasst das Verfahren einen weiteren Verfahrensschritt, in welchem das Formwerkzeug nach der Entnahme des beschichteten Bauteils in Verfahrensschritt (I) gereinigt, insbesondere manuell gereinigt, wird. Die Reinigung des Formwerkzeugs kann durch Sandstrahlen oder durch Verwendung von organischen Lösungsmitteln erfolgen. Dieser Reinigungsschritt stellt sicher, dass die Oberfläche der Formteile des Formwerkzeugs keine unerwünschten Verunreinigungen aufweisen, durch welche die Haftung der Trennmittelzusammensetzung auf der Oberfläche der Formteile und somit die Trennwirkung der Trennmittelzusammensetzung herabgesetzt wird.

In diesem Zusammenhang ist es vorteilhaft, wenn der weitere Verfahrensschritt nach 20 bis 100, insbesondere 20 bis 50 Wiederholungen, der Verfahrensschritte (A) bis (I) durchgeführt wird. Die Reinigung des Formwerkzeugs nach einer Anzahl von 20 bis 100 hergestellten beschichten Bauteilen erlaubt eine effiziente Verfahrensführung, da das Formwerkzeug nicht bereits nach einmaliger Verwendung gereinigt werden muss. Darüber hinaus wird die Menge an Reinigungsabfällen reduziert.

Das erfindungsgemäße Verfahren erlaubt die Herstellung von spritzgeformten beschichteten Bauteilen, welche ohne aufwände Nachbehandlung weiterverarbeitet werden können. Auch ohne Nachbeschichtung ist die durch das Trennmittel auf dem Bauteil erhaltene Beschichtung hochelastisch bzw. flexibel sowie UV-beständig und nicht glänzend, so dass nicht nur eine beschädigungsfreie Entformung des beschichteten Bauteils, sondern auch ein effektiver Schutz des hergestellten beschichteten Bauteils gegen Umwelteinflüsse, wie UV-Strahlung, Schmutz oder dergleichen, bereits direkt nach der Herstellung des beschichteten Bauteils erreicht wird. Da das in dem erfindungsgemäßen Verfahren verwendete Beschichtungsmittel gleichzeitig eine Trennwirkung aufweist, kann dieses Mittel sowohl als Trennmittel als auch als Beschichtungsmittel eingesetzt werden. Folglich ist der Einsatz eines separaten Trennmittels, welches vor Nachbehandlung des Bauteils aufwändig entfernt werden muss, nicht erforderlich. Weiterhin weisen die hergestellten beschichteten Bauteile selbst dann eine regelmäßige Oberfläche auf, wenn zu deren Herstellung Schäume verwendet werden, welche in Kombination mit herkömmlichen Trennmitteln zu Bauteilen mit sehr unregelmäßiger Oberfläche führen. Da nur geringe Rückstände des Trennmittels in dem Formwerkzeug verbleiben, müssen die verwendeten Formwerkzeuge nicht vor jeder erneuten Applikation des Trennmittels gereinigt werden.

Die Erfindung wird insbesondere durch die nachfolgenden Ausführungsformen beschrieben:
Gemäß einer ersten Ausführungsform betrifft die vorliegende Erfindung ein manuelles Verfahren zum Spritzformen von beschichteten Bauteilen, insbesondere Sohlen aus Kunststoff, umfassend die nachfolgenden Schritte in der angegebenen Reihenfolge:
(A) Applizieren einer Trennmittelzusammensetzung auf mindestens eine Innenseite mindestens eines Formteils eines verschließbaren Formwerkzeugs,
(B) Ablüften der in Schritt (A) applizierten Trennmittelzusammensetzung,
(C) gegebenenfalls Einlegen mindestens eines Materials M1 und Erhitzen des Formwerkzeugs,
(D) Applizieren einer Zusammensetzung Z1 in das geöffnete Formwerkzeug,
(E) Manuelles Verschließen des Formwerkzeugs,
(F) Vernetzen der Trennmittelzusammensetzung sowie der in Verfahrensschritt (D) applizierten Zusammensetzung Z1,
(G) gegebenenfalls Applizieren mindestens einer weiteren Zusammensetzung Z2 sowie Vernetzen dieser Zusammensetzung(en),
(H) Manuelles Öffnen des Formwerkzeugs,
(I) Manuelle Entnahme des geformten und beschichteten Bauteils und
(J) gegebenenfalls Nachbehandlung des geformten und beschichteten Bauteils, wobei die Trennmittelzusammensetzung umfasst:
   (a) mindestens ein Lösungsmittel L,
   (b) mindestens eine Verbindung der allgemeinen Formel (I)

      R¹-(C=O)ᵣ-O-(AO)ₛ-R² (I)

      worin R¹ ein gesättigter oder ungesättigter, aliphatischer Kohlenwasserstoffrest mit 6 bis 30 Kohlenstoffatomen ist,
      R² für H, einen Rest PO(OH)₂ oder den gegebenenfalls teilweise phosphatierten Rest eines Mono- oder Disaccharids oder den gegebenenfalls teilweise phosphatierten Rest eines Alditols steht,
      AO für einen oder mehrere Alkylenoxid-Reste gewählt aus der Gruppe bestehend aus Ethylenoxid, Propylenoxid und Butylenoxid steht,
      r = 0 oder 1 ist, und s = 0 bis 30 ist;
   (c) gegebenenfalls mindestens ein polyethermodifiziertes Alkylpolysiloxan
   (d) mindestens ein Polysiloxan der allgemeinen Formel (II)

      R³-Si(R⁴)₂-[O-Si(R⁴)(R⁵)]ₐ-[O-Si(R⁴)₂]_{b}-O-Si(R⁴)₂-R³ (II),

      worin
      R³ und R⁴, jeweils unabhängig voneinander, für eine Methylgruppe oder einen Rest (HO-CH₂)₂-C(CH₂-CH₃)-CH₂-O-(CH₂)₃-* stehen,
      R⁵ für eine Methylgruppe steht,
      a für 0 oder 1 bis 10 steht und
      b für 3 bis 30 und
   (e) mindestens ein Bindemittel B,
   wobei die Trennmittelzusammensetzung zusätzlich mindestens ein Vernetzungsmittel V enthält.

Gemäß einer zweiten Ausführungsform betrifft die vorliegende Erfindung ein manuelles Verfahren nach Ausführungsform 1, dadurch gekennzeichnet, dass die Applikation der Trennmittelzusammensetzung in Verfahrensschritt (A) manuell oder unter Einsatz von Applikationsrobotern erfolgt.

Gemäß einer dritten Ausführungsform betrifft die vorliegende Erfindung ein manuelles Verfahren nach Ausführungsform 2, dadurch gekennzeichnet, dass bei der Applikation der Trennmittelzusammensetzung unter Einsatz von Applikationsrobotern Düsen mit einem Durchmesser von 0,05 bis 1,5 mm, vorzugsweise von 0,08 bis 1 mm, insbesondere von 0,1 bis 0,8 mm, verwendet werden.

Gemäß einer vierten Ausführungsform betrifft die vorliegende Erfindung ein manuelles Verfahren nach einer der vorangehenden Ausführungsformen, dadurch gekennzeichnet, dass das Formwerkzeug in Verfahrensschritt (A) eine Temperatur von 20 bis 100 °C, besonders bevorzugt 30 bis 90 °C, ganz besonders bevorzugt 40 bis 80 °C, insbesondere 50 bis 70 °C, aufweist.

Gemäß einer fünften Ausführungsform betrifft die vorliegende Erfindung ein manuelles Verfahren nach einer der vorangehenden Ausführungsformen, dadurch gekennzeichnet, dass das Bereitstellung der Trennmittelzusammensetzung in einer automatischen Mischanlage erfolgt.

Gemäß einer sechsten Ausführungsform betrifft die vorliegende Erfindung ein manuelles Verfahren nach Ausführungsform 5, dadurch gekennzeichnet, dass die automatische Mischanlage eine Mischeinheit, insbesondere einen statischen Mischer, sowie mindestens zwei Vorrichtungen zur Zuführung von Komponenten, insbesondere Zahnradpumpen und/oder Druckventile, aufweist.

Gemäß einer siebten Ausführungsform betrifft die vorliegende Erfindung ein manuelles Verfahren nach einer der vorangehenden Ausführungsformen, dadurch gekennzeichnet, dass die Trennmittelzusammensetzung eine Viskosität von 10 bis 60 s, insbesondere von 20 bis 30 s (DIN4 Auslaufbecher), gemessen gemäß DIN EN ISO 2431 (März 2012), aufweist.

Gemäß einer achten Ausführungsform betrifft die vorliegende Erfindung ein manuelles Verfahren nach einer der vorangehenden Ausführungsformen, dadurch gekennzeichnet, dass die Trennmittelzusammensetzung einen Festkörper von 30 bis 60 Gew.-%, vorzugsweise von 35 bis 55 Gew.-%, bevorzugt von 40 bis 50 Gew.-%, insbesondere von 42 bis 48 Gew.-%, gemessen nach ASTM D2369 (2015) (110°C, 60 min), aufweist.

Gemäß einer neunten Ausführungsform betrifft die vorliegende Erfindung ein manuelles Verfahren nach einer der vorangehenden Ausführungsformen, dadurch gekennzeichnet, dass das mindestens eine Lösungsmittel L ausgewählt ist aus organischen Lösungsmitteln, Wasser sowie deren Mischungen und in einer Gesamtmenge von 40 bis 70 Gew.-%, besonders bevorzugt 45 bis 65 Gew.-% und ganz besonders bevorzugt 50 bis 60 Gew.-%, insbesondere 52 bis 58 Gew.-%, jeweils bezogen auf das Gesamtgewicht der Zusammensetzung, enthalten ist.

Gemäß einer zehnten Ausführungsform betrifft die vorliegende Erfindung ein manuelles Verfahren nach einer der vorangehenden Ausführungsformen, dadurch gekennzeichnet, dass in der allgemeinen Formel (I) R¹ für einen gesättigten oder ungesättigten, aliphatischen Kohlenwasserstoffrest mit 10 bis 24 Kohlenstoffatomen steht, R² für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht, AO für einen oder mehrere Alkylenoxid-Reste gewählt aus der Gruppe bestehend aus Ethylenoxid und Propylenoxid steht, r = 0 oder 1 ist und s = 0 oder 1 bis 25 ist.

Gemäß einer elften Ausführungsform betrifft die vorliegende Erfindung ein manuelles Verfahren nach einer der vorangehenden Ausführungsformen, dadurch gekennzeichnet, dass in der allgemeinen Formel (I) R¹ für einen gesättigten oder ungesättigten, aliphatischen Kohlenwasserstoffrest mit 10 bis 24 Kohlenstoffatomen steht, R² für H, einen Rest PO(OH)₂ oder den gegebenenfalls teilweise phosphatierten Rest eines Monosaccharids oder den gegebenenfalls teilweise phosphatierten Rest eines Alditols, insbesondere des Sorbitols steht, AO für einen oder mehrere Alkylenoxid-Reste gewählt aus der Gruppe bestehend aus Ethylenoxid und Propylenoxid steht und der Ethylenoxidanteil an der Gesamtheit der Reste AO mindestens 70 mol-% beträgt, r = 0 oder 1 ist und s = 0 oder s = 6 bis 20 ist.

Gemäß einer zwölften Ausführungsform betrifft die vorliegende Erfindung ein manuelles Verfahren nach einer der vorangehenden Ausführungsformen, dadurch gekennzeichnet, dass die mindestens eine Verbindung der allgemeinen Formel (I) in einer Gesamtmenge von 0,1 bis 10 Gew.-%, besonders bevorzugt 0,5 bis 5 Gew.-%, insbesondere 1,5 bis 4 Gew.-%, jeweils bezogen das Gesamtgewicht der Trennmittelzusammensetzung, enthalten ist.

Gemäß einer dreizehnten Ausführungsform betrifft die vorliegende Erfindung ein manuelles Verfahren nach einer der vorangehenden Ausführungsformen, dadurch gekennzeichnet, dass das polyethermodifizierte Alkylpolysiloxan mindestens eine Struktureinheit (R⁷)₂(OR⁶)SiO_{1/2} und mindestens eine Struktureinheit (R⁷)₂SiO_{2/2}, wobei R⁶ für eine Ethylenoxid-, Propylenoxid- und Butylenoxidgruppe, insbesondere eine Mischung von Ethylenoxid- und Propylenoxid- und Butylenoxidgruppen und R⁷ für eine C₁-C₁₀-Alkylgruppe, insbesondere eine Methylgruppe, steht, umfasst.

Gemäß einer vierzehnten Ausführungsform betrifft die vorliegende Erfindung ein manuelles Verfahren nach Ausführungsform 13, dadurch gekennzeichnet, dass das polyethermodifizierte Alkylpolysiloxan ein molares Verhältnis von Siloxan : Ethylenoxidgruppen : Propylenoxidgruppen : Butylenoxidgruppen 6 : 21 : 15 : 1 bis 67 : 22 : 16 : 1 aufweist.

Gemäß einer fünfzehnten Ausführungsform betrifft die vorliegende Erfindung ein manuelles Verfahren nach einer der Ausführungsformen 13 oder 14, dadurch gekennzeichnet, dass das polyethermodifizierte Alkylpolysiloxan ein molares Verhältnis der Struktureinheit (R⁷)₂(OR⁶)SiO_{1/2} zu der Struktureinheit (R⁷)₂SiO_{2/2} von 1 : 10 bis 1 : 15, insbesondere von 1 : 10 bis 1 : 13, aufweist.

Gemäß einer sechzehnten Ausführungsform betrifft die vorliegende Erfindung ein manuelles Verfahren nach einer der vorangehenden Ausführungsformen, dadurch gekennzeichnet, dass das mindestens eine polyethermodifizierte Alkylpolysiloxan in einer Gesamtmenge von 0 Gew.-% oder von 0,1 bis 6 Gew.-%, bevorzugt 0,5 bis 4 Gew.-%, insbesondere 0,8 bis 3 Gew.-%, jeweils bezogen auf das Gesamtgewicht der Trennmittelzusammensetzung, enthalten ist.

Gemäß einer siebzehnten Ausführungsform betrifft die vorliegende Erfindung ein manuelles Verfahren nach einer der vorangehenden Ausführungsformen, dadurch gekennzeichnet, dass in der allgemeinen Formel (II) der Rest R³ für einen Rest (HOCH₂)₂-C(CH₂-CH₃)-CH₂-O-(CH₂)₃-* steht, der Rest R⁴ für eine Methylgruppe steht, der Rest R⁵ für eine Methylgruppe steht, a für 0 steht und b für 7 bis 14 steht.

Gemäß einer achtzehnten Ausführungsform betrifft die vorliegende Erfindung ein manuelles Verfahren nach einer der vorangehenden Ausführungsformen, dadurch gekennzeichnet, dass diese das mindestens eine Polysiloxan der allgemeinen Formel (II) in einer Gesamtmenge von 0,1 bis 5 Gew.-%, bevorzugt 0,5 bis 4 Gew.-%, insbesondere 0,8 bis 2,5 Gew.-%, jeweils bezogen auf das Gesamtgewicht der Trennmittelzusammensetzung, enthält.

Gemäß einer neunzehnten Ausführungsform betrifft die vorliegende Erfindung ein manuelles Verfahren nach einer der vorangehenden Ausführungsformen, dadurch gekennzeichnet, dass das mindestens eine Bindemittel B in einer Gesamtmenge (Feststoffgehalt) von 20 bis 50 Gew.-%, vorzugsweise von 25 bis 40 Gew.-%, insbesondere von 25 bis 35 Gew.-%, jeweils bezogen auf das Gesamtgewicht der Zusammensetzung, enthalten ist.

Gemäß einer zwanzigsten Ausführungsform betrifft die vorliegende Erfindung ein manuelles Verfahren nach einer der vorangehenden Ausführungsformen, dadurch gekennzeichnet, dass das Bindemittel B ausgewählt ist aus der Gruppe bestehend aus (i) Poly(meth)acrylaten, insbesondere hydroxyfunktionellen und/oder carboxylatfunktionellen und/oder aminfunktionellen Poly(meth)acrylaten, (ii) Polyurethanen, insbesondere hydroxyfunktionellen und/oder carboxylatfunktionellen und/oder aminfunktionellen Polyurethanen, (iii) Polyestern, insbesondere Polyester-Polyolen, (iv) Polyethern, insbesondere Polyether-Polyolen, (v) Mischpolymerisaten der genannten Polymere sowie (vi) deren Mischungen.

Gemäß einer einundzwanzigsten Ausführungsform betrifft die vorliegende Erfindung ein manuelles Verfahren nach Ausführungsform 20, dadurch gekennzeichnet, dass das Bindemittel B ausgewählt ist aus hydroxyfunktionellen Poly(meth)acrylaten und/oder Polyester-Polyolen, insbesondere aus einer Mischung mindestens eines hydroxyfunktionellen Poly(meth)acrylats und mindestens eines Polyester-Polyols.

Gemäß einer zweiundzwanzigsten Ausführungsform betrifft die vorliegende Erfindung ein manuelles Verfahren nach einer der vorangehenden Ausführungsformen 20 oder 21, dadurch gekennzeichnet, dass das hydroxyfunktionelle Poly(meth)acrylat eine Hydroxylzahl von 50 bis 120 mg KOH/g, vorzugsweise von 70 bis 95 mg KOH/g, insbesondere von 75 bis 90 mg KOH/g oder von 80 bis 85 mg KOH/g, aufweist.

Gemäß einer dreiundzwanzigsten Ausführungsform betrifft die vorliegende Erfindung ein manuelles Verfahren nach einer der vorangehenden Ausführungsformen 20 bis 22, dadurch gekennzeichnet, dass das hydroxyfunktionelle Poly(meth)acrylat eine Säurezahl von 1 bis 20 mg KOH/g, insbesondere 6 bis 14 mg KOH/g oder 8 bis 12 mg KOH/g, aufweist und/oder ein zahlenmittleres Molekulargewicht Mₙ von 4.000 bis 10.000 g/mol, bevorzugt 5.000 bis 9.000 g/mol, besonders bevorzugt 5.500 bis 8.000 g/mol, insbesondere 6.000 bis 7.500 g/mol besitzt.

Gemäß einer vierundzwanzigsten Ausführungsform betrifft die vorliegende Erfindung ein manuelles Verfahren nach einer der vorangehenden Ausführungsformen 20 bis 23, dadurch gekennzeichnet, dass das hydroxyfunktionelle Poly(meth)acrylat eine Hydroxylfunktionalität von 5 bis 15, bevorzugt von 6 bis 14, insbesondere von 8 bis 12, aufweist.

Gemäß einer fünfundzwanzigsten Ausführungsform betrifft die vorliegende Erfindung ein manuelles Verfahren nach einer der vorangehenden Ausführungsformen 20 bis 24, dadurch gekennzeichnet, dass das hydroxyfunktionelle Poly(meth)acrylat herstellbar ist durch Umsetzung von
(a1) mindestens einem hydroxyfunktionellen (Meth)acrylsäureester, insbesondere (Meth)acrylsäureester der Formel HC=CR^{x}-COO-R^{y}-OH, worin R^{x} für H oder CH₃ steht und R^{y} für einen Alkylenrest mit 2 bis 6, vorzugsweise 2 bis 4, besonders bevorzugt 2 oder 3, Kohlenstoffatomen steht,
(a2) mindestens einem carboxyfunktionellen ethylenisch ungesättigten Monomer, insbesondere (Meth)acrylsäure, und
(a3) mindestens einem hydroxylgruppenfreien und carboxylgruppenfreien Ester der (Meth)acrylsäure und/oder mindestens einem hydroxylgruppenfreien und carboxylgruppenfreien Vinylmonomeren, insbesondere Styrol.

Gemäß einer sechsundzwanzigsten Ausführungsform betrifft die vorliegende Erfindung ein manuelles Verfahren nach Ausführungsform 25, dadurch gekennzeichnet, dass das carboxyfunktionelle ethylenisch ungesättigte Monomer (a2), insbesondere (Meth)acrylsäure, in einer Gesamtmenge von 20 bis 45 Gew.-%, vorzugsweise von 25 bis 40 Gew.-%, insbesondere von 30 bis 35 Gew.-%, jeweils bezogen auf das Gesamtgewicht aller zur Herstellung des hydroxyfunktionellen Poly(meth)acrylats eingesetzten Monomere, enthalten ist.

Gemäß einer siebenundzwanzigsten Ausführungsform betrifft die vorliegende Erfindung ein manuelles Verfahren nach einer der vorangehenden Ausführungsformen 25 oder 26, dadurch gekennzeichnet, dass das Vinylmonomer (a3), insbesondere Styrol, in einer Gesamtmenge von 30 bis 60 Gew.-%, vorzugsweise von 35 bis 55 Gew.-%, insbesondere von 40 bis 50 Gew.-%, jeweils bezogen auf das Gesamtgewicht aller zur Herstellung des hydroxyfunktionellen Poly(meth)acrylats eingesetzten Monomere, enthalten ist.

Gemäß einer achtundzwanzigsten Ausführungsform betrifft die vorliegende Erfindung ein manuelles Verfahren nach einer der vorangehenden Ausführungsformen 20 bis 27, dadurch gekennzeichnet, dass das hydroxyfunktionelle Poly(meth)acrylat in einer Gesamtmenge von 10 Gew.-% bis 97 Gew.-%, vorzugsweise von 40 bis 70 Gew.-%, insbesondere von 40 bis 50 Gew.-%, jeweils bezogen auf das Gesamtgewicht des Festkörpers aller in der Trennmittelzusammensetzung enthaltenen Bindemittel, enthalten ist.

Gemäß einer neunundzwanzigsten Ausführungsform betrifft die vorliegende Erfindung ein manuelles Verfahren nach einer der vorangehenden Ausführungsformen 20 bis 28, dadurch gekennzeichnet, dass das Polyester-Polyol eine Hydroxylzahl von 100 bis 200 mg KOH/g, vorzugsweise von 110 bis 180 mg KOH/g, insbesondere von 120 bis 160 mg KOH/g, aufweist.

Gemäß einer dreißigsten Ausführungsform betrifft die vorliegende Erfindung ein manuelles Verfahren nach einer der vorangehenden Ausführungsformen 20 bis 29, dadurch gekennzeichnet, dass das Polyester-Polyol eine Säurezahl von 0 bis 9 mg KOH/g, insbesondere 0,2 bis 2 mg KOH/g, aufweist und/oder ein zahlenmittleres Molekulargewicht von 800 bis 3.000 g/mol, bevorzugt 1.000 bis 2.000 g/mol, insbesondere von 1.000 bis 1.600 g/mol, besitzt.

Gemäß einer einunddreißigsten Ausführungsform betrifft die vorliegende Erfindung ein manuelles Verfahren nach einer der vorangehenden Ausführungsformen 20 bis 30, dadurch gekennzeichnet, dass das Polyester-Polyol verzweigt ist.

Gemäß einer zweiunddreißigsten Ausführungsform betrifft die vorliegende Erfindung ein manuelles Verfahren nach einer der vorangehenden Ausführungsformen 20 bis 31, dadurch gekennzeichnet, dass das Polyester-Polyol eine Hydroxyfunktionalität von 2,2 bis 4, vorzugsweise von 2,5 bis 3,6, insbesondere von 2,7 bis 3,6, aufweist.

Gemäß einer dreiunddreißigsten Ausführungsform betrifft die vorliegende Erfindung ein manuelles Verfahren nach einer der vorangehenden Ausführungsformen 20 bis 32, dadurch gekennzeichnet, dass das Polyester-Polyol in einer Gesamtmenge von 40 Gew.-% bis 97 Gew.-%, vorzugsweise von 40 bis 70 Gew.-%, insbesondere von 50 bis 65 Gew.-%, jeweils bezogen auf das Gesamtgewicht des Festkörpers aller in der Zusammensetzung enthaltenen Bindemittel, enthalten ist.

Gemäß einer vierunddreißigsten Ausführungsform betrifft die vorliegende Erfindung ein manuelles Verfahren nach einer der vorangehenden Ausführungsformen, dadurch gekennzeichnet, dass das Vernetzungsmittel V ausgewählt ist aus der Gruppen bestehend aus Aminoplast-Harzen, Polyisocyanaten, blockierten Polyisocyanaten, Polycarbodiimiden, UV-Licht, Wärme, Photoinitiatoren sowie deren Mischungen.

Gemäß einer fünfunddreißigsten Ausführungsform betrifft die vorliegende Erfindung ein manuelles Verfahren nach Ausführungsform 34, dadurch gekennzeichnet, dass das Polyisocyanat eine NCO-Gruppenfunktionalität von größer 2,4 bis 5, vorzugsweise 2,6 bis 4, besonders bevorzugt 2,8 bis 3,6 besitzt.

Gemäß einer sechsunddreißigsten Ausführungsform betrifft die vorliegende Erfindung ein manuelles Verfahren nach einer der vorangehenden Ausführungsformen 34 oder 35, dadurch gekennzeichnet, dass das Polyisocyanat mindestens einen Isocyanurat-Ring oder mindestens einen Iminooxadiazindion-Ring enthält.

Gemäß einer siebenunddreißigsten Ausführungsform betrifft die vorliegende Erfindung ein manuelles Verfahren nach einer der vorangehenden Ausführungsformen 34 oder 35, dadurch gekennzeichnet, dass zwei voneinander verschiedene Polyisocyanate enthalten sind, wobei das erste Polyisocyanat mindestens einen Isocyanurat-Ring und das zweite Polyisocyanat mindestens einen Iminooxadiazindion-Ring enthält.

Gemäß einer achtunddreißigsten Ausführungsform betrifft die vorliegende Erfindung ein manuelles Verfahren nach einer der vorangehenden Ausführungsformen 33 bis 37, dadurch gekennzeichnet, dass das mindestens eine Vernetzungsmittel V in einer Gesamtmenge von 10 Gew.-% bis 40 Gew.-%, vorzugsweise von 10 bis 30 Gew.-%, insbesondere von 15 bis 25 Gew.-%, jeweils bezogen auf das Gesamtgewicht der Trennmittelzusammensetzung, enthalten ist.

Gemäß einer neununddreißigsten Ausführungsform betrifft die vorliegende Erfindung ein manuelles Verfahren nach einer der vorangehenden Ausführungsformen, dadurch gekennzeichnet, dass das molare Verhältnis der funktionellen Gruppen des Vernetzungsmittels V, insbesondere der NCO- oder Carbodiimid-Gruppen, zu der Summe der gegenüber den funktionellen Gruppen des Vernetzungsmittels V reaktiven Gruppen des mindestens einen Bindemittels B, insbesondere Hydroxylgruppen, 0,4:1 bis 1:1, bevorzugt 0,65:1 bis 0,85:1, insbesondere 0,7:1 bis 0,8:1 beträgt.

Gemäß einer undvierzigsten Ausführungsform betrifft die vorliegende Erfindung ein manuelles Verfahren nach einer der vorangehenden Ausführungsformen, dadurch gekennzeichnet, dass die Trennmittelzusammensetzung zusätzlich mindestens einen Vernetzungskatalysator VK enthält.

Gemäß einer einundvierzigsten Ausführungsform betrifft die vorliegende Erfindung ein manuelles Verfahren nach Ausführungsform 40, dadurch gekennzeichnet, dass der Vernetzungskatalysator VK gewählt ist aus der Gruppe der Bismutcarboxylate.

Gemäß einer zweiundvierzigsten Ausführungsform betrifft die vorliegende Erfindung ein manuelles Verfahren nach Ausführungsform 41, dadurch gekennzeichnet, dass der Vernetzungskatalysator VK aus der Gruppe der Bismutcarboxylate die allgemeine Formel (III)

Bi[OOC(CₙH₂ₙ₊₁)]₃ (III)

mit n = 5 bis 15, vorzugsweise n = 7 bis 13, insbesondere n = 9 bis 11, aufweist.

Gemäß einer dreiundvierzigsten Ausführungsform betrifft die vorliegende Erfindung ein manuelles Verfahren nach einer der vorangehenden Ausführungsformen 40 bis 42, dadurch gekennzeichnet, dass der mindestens eine Vernetzungskatalysator VK in einer Gesamtmenge von 0,01 Gew.-% bis 3,5 Gew.-%, vorzugsweise von 0,1 bis 2 Gew.-%, insbesondere von 0,4 bis 1,5 Gew.-%, jeweils bezogen auf das Gesamtgewicht der Trennmittelzusammensetzung, enthalten ist.

Gemäß einer vierundvierzigsten Ausführungsform betrifft die vorliegende Erfindung ein manuelles Verfahren nach einer der vorangehenden Ausführungsformen, dadurch gekennzeichnet, dass die Trennmittelzusammensetzung zusätzlich mindestens eine Basisfarbe BF enthält.

Gemäß einer fünfundvierzigsten Ausführungsform betrifft die vorliegende Erfindung ein manuelles Verfahren nach Ausführungsform 44, dadurch gekennzeichnet, dass mindestens eine Basisfarbe BF in einer Gesamtmenge von 5 bis 40 Gew.-%, insbesondere von 10 bis 20 Gew.-%, bezogen auf das Gesamtgewicht der Zusammensetzung, enthalten ist.

Gemäß einer sechsundvierzigsten Ausführungsform betrifft die vorliegende Erfindung ein manuelles Verfahren nach einer der Ausführungsformen 44 oder 45, dadurch gekennzeichnet, dass die Basisfarbe BF mindestens ein Effektpigment und/oder mindestens ein farbgebendes Pigment, vorzugsweise in einer Gesamtmenge von 0,5 bis 70 Gew.-%, bezogen auf das Gesamtgewicht der Basisfarbe BF, enthält.

Gemäß einer siebenundvierzigsten Ausführungsform betrifft die vorliegende Erfindung ein manuelles Verfahren nach Ausführungsform 45, dadurch gekennzeichnet, dass das mindestens eine Effektpigment (a1) ausgewählt ist aus der Gruppe von plättchenförmigen Metalleffektpigmenten, Perglanzpigmenten, Metalloxid-Glimmer-Pigmenten, plättchenförmigem Graphit, plättchenförmigem Eisenoxid, Mehrschicht-Effekt-Pigmenten aus PVD-Filmen, Liquid Crystal Polymer-Pigmenten sowie deren Mischungen, insbesondere aus plättchenförmige Aluminiumpigmenten und/oder beschichteten Metalloxid-Glimmer-Pigmenten und/oder mit Metalloxiden beschichteten Borosilicaten.

Gemäß einer achtundvierzigsten Ausführungsform betrifft die vorliegende Erfindung ein manuelles Verfahren nach einer der Ausführungsformen 46 oder 47, dadurch gekennzeichnet, dass das mindestens eine farbgebende Pigment (a1) ausgewählt ist aus der Gruppe von Weißpigmenten, Schwarzpigmenten, Buntpigmenten, Monoazopigmenten, Bisazopigmenten, Anthrachinonpigmenten, Benzimidazolpigmenten, Chinacridonpigmenten, Chinophthalonpigmenten, Diketopyrrolopyrrolpigmenten, Dioxazinpigmenten, Indanthronpigmenten, Isoindolinpigmenten, Isoindolinonpigmenten, Azomethinpigmenten, Thioindigopigmenten, Metallkomplexpigmenten, Perinonpigmenten, Perylenpigmenten, Phthalocyaninpigmenten, Anilinschwarz sowie deren Mischungen.

Gemäß einer neunundvierzigsten Ausführungsform betrifft die vorliegende Erfindung ein manuelles Verfahren nach einer der Ausführungsformen 44 bis 48, dadurch gekennzeichnet, dass die Basisfarbe BF mindestens ein Bindemittel, ausgewählt aus der Gruppe von Polyurethanpolymeren, Aminoplastpolymeren, Polyacrylatpolymeren, Polyesterpolymeren sowie deren Mischungen, insbesondere anionisch stabilisierten Polyurethanpolymeren, vorzugsweise in einer Gesamtmenge von 10 bis 80 Gew.-%, bezogen auf das Gesamtgewicht der Basisfarbe BF, enthält.

Gemäß einer fünfzigsten Ausführungsform betrifft die vorliegende Erfindung ein manuelles Verfahren nach Ausführungsform 49, dadurch gekennzeichnet, dass das anionisch stabilisierte Polyurethanpolymer erhältlich ist durch Umsetzung eines NCO-Präpolymers mit einem Modifizierungsmittel in Form eines Polyols, insbesondere Trimethylolpropan, wobei das NCO-Präpolymer erhältlich ist durch Umsetzung von
(i) 55 bis 70 Gew.-%, bezogen auf das Gesamtgewicht der Verbindungen (i) bis (iv), mindestens eines Polyesterpolyols mit einer OH-Zahl von 40 bis 100 mg KOH/g, bezogen auf den Feststoffgehalt, und einem zahlenmittleren Molekulargewicht Mₙ von 1.000 bis 3.000 Da, wobei das Polyesterpolyol bevorzugt keine olefinischen Doppelbindungen enthält,
(ii) 3 bis 7 Gew.-%, bezogen auf das Gesamtgewicht der Verbindungen (i) bis (iv), mindestens einer Alkansäure mit 3 bis 8 Kohlenstoffatomen sowie zwei Hydroxylgruppen am alpha-ständigen Kohlenstoffatom, insbesondere Dimethylolpropionsäure,
(iii) 0,5 bis 3 Gew.-%, bezogen auf das Gesamtgewicht der Verbindungen (i) bis (iv), mindestens eines C₃-C₈-Alkandiols, insbesondere 1,6-Hexandiol, und
(iv) 25 bis 30 Gew.-%, bezogen auf das Gesamtgewicht der Verbindungen (i) bis (iv), mindestens einem Diisocyanat der Formel (IV) mit X = Dicyclohexylmethylrest und R₃ = R₄ = Wasserstoff,
wobei das Äquivalentverhältnis von NCO-Präpolymer zu Modifizierungsmittel zwischen 2,0 : 1,0 und 1,0: 2,0, insbesondere zwischen 1,1 : 1 und 1 : 1,1, beträgt.

Gemäß einer einundfünfzigsten Ausführungsform betrifft die vorliegende Erfindung ein manuelles Verfahren nach einer der Ausführungsformen 49 oder 50, dadurch gekennzeichnet, dass das anionisch stabilisierte Polyurethanpolymer einen Neutralisationsgrad von 50 bis 100 %, bevorzugt von 60 bis 80%, aufweist.

Gemäß einer zweiundfünfzigsten Ausführungsform betrifft die vorliegende Erfindung ein manuelles Verfahren nach einer der vorangehenden Ausführungsformen, dadurch gekennzeichnet, dass zusätzlich mindestens ein Additiv, ausgewählt aus der Gruppe bestehend aus Netz- und/oder Dispergiermitteln, Rheologiehilfsmitteln, Verlaufsmitteln, UV-Absorbern sowie deren Mischungen, enthalten ist.

Gemäß einer dreiundfünfzigsten Ausführungsform betrifft die vorliegende Erfindung ein manuelles Verfahren nach Ausführungsform 52, dadurch gekennzeichnet, dass das mindestens eine Additiv in einer Gesamtmenge von 0 Gew.-% bis 10 Gew.-%, bezogen auf das Gesamtgewicht der Zusammensetzung, enthalten ist.

Gemäß einer vierundfünzigsten Ausführungsform betrifft die vorliegende Erfindung ein manuelles Verfahren nach einer der vorangehenden Ausführungsformen, dadurch gekennzeichnet, dass das Ablüften der Trennmittelzusammensetzung in Verfahrensschritt (B) für einen Zeitraum von 20 Sekunden bis 120 Minuten, vorzugsweise von 20 Sekunden bis 2 Minuten, insbesondere von 25 Sekunden bis 45 Sekunden, erfolgt.

Gemäß einer fünfundfünfzigsten Ausführungsform betrifft die vorliegende Erfindung ein manuelles Verfahren nach einer der vorangehenden Ausführungsformen, dadurch gekennzeichnet, dass die Trockenschichtdicke der abgelüfteten Trennmittelzusammensetzung in Verfahrensschritt (B) 20 bis 120 µm, insbesondere 25 bis 100 µm, beträgt.

Gemäß einer sechsundfünfzigsten Ausführungsform betrifft die vorliegende Erfindung ein manuelles Verfahren nach einer der vorangehenden Ausführungsformen, dadurch gekennzeichnet, dass das Ablüften der Trennmittelzusammensetzung in Verfahrensschritt (B) bei einer Temperatur von 20 bis 100 °C, besonders bevorzugt 30 bis 90 °C, ganz besonders bevorzugt 40 bis 80 °C, insbesondere 50 bis 70 °C, erfolgt.

Gemäß einer siebenundfünfzigsten Ausführungsform betrifft die vorliegende Erfindung ein manuelles Verfahren nach einer der vorangehenden Ausführungsformen, dadurch gekennzeichnet, dass es sich bei dem in Verfahrensschritt (C) eingelegten Material M1 um eine Außensohle, insbesondere eine Außensohle aus thermoplastischem Polyurethan, handelt.

Gemäß einer achtundfünfzigsten Ausführungsform betrifft die vorliegende Erfindung ein manuelles Verfahren nach einer der vorangehenden Ausführungsformen, dadurch gekennzeichnet, dass das Formwerkzeug in Verfahrensschritt (C) auf 20 bis 100 °C, besonders bevorzugt 30 bis 90 °C, ganz besonders bevorzugt 40 bis 80 °C, insbesondere 50 bis 70 °C, erhitzt wird.

Gemäß einer neunundfünfzigsten Ausführungsform betrifft die vorliegende Erfindung ein manuelles Verfahren nach einer der vorangehenden Ausführungsformen, dadurch gekennzeichnet, dass es sich bei der in Verfahrensschritt (D) applizierten Zusammensetzung Z1 um einen Polymerschaum, insbesondere einen Polyurethanschaumstoff, handelt.

Gemäß einer sechzigsten Ausführungsform betrifft die vorliegende Erfindung ein manuelles Verfahren nach einer der vorangehenden Ausführungsformen, dadurch gekennzeichnet, dass die Zusammensetzung Z1 in Verfahrensschritt (D) automatisch appliziert wird.

Gemäß einer einundsechzigsten Ausführungsform betrifft die vorliegende Erfindung ein manuelles Verfahren nach einer der vorangehenden Ausführungsformen, dadurch gekennzeichnet, dass die Vernetzung in Verfahrensschritt (F) bei Temperaturen von 45 bis 75 °C, vorzugsweise 50 bis 70 °C, insbesondere 52 bis 65 °C, stattfindet.

Gemäß einer zweiundsechzigsten Ausführungsform betrifft die vorliegende Erfindung ein manuelles Verfahren nach einer der vorangehenden Ausführungsformen, dadurch gekennzeichnet, dass die Vernetzung in Verfahrensschritt (F) für einen Zeitraum von 1 bis 20 Minuten, vorzugsweise nach 3 bis 15 Minuten, insbesondere nach 4 bis 10 Minuten, erfolgt.

Gemäß einer dreiundsechzigsten Ausführungsform betrifft die vorliegende Erfindung ein manuelles Verfahren nach einer der vorangehenden Ausführungsformen, dadurch gekennzeichnet, dass es sich bei der in Verfahrensschritt (G) applizierten Zusammensetzung Z2 um einen Polymerschaum, insbesondere einen Polyurethanschaumstoff, handelt, welcher bevorzugt verschieden ist von der Zusammensetzung Z1.

Gemäß einer vierundsechzigsten Ausführungsform betrifft die vorliegende Erfindung ein manuelles Verfahren nach einer der vorangehenden Ausführungsformen, dadurch gekennzeichnet, dass es sich bei der Nachbehandlung (J) um eine Entgratung und/oder Polierung und/oder Lackierung des hergestellten und beschichteten Bauteils handelt.

Gemäß einer fünfundsechzigsten Ausführungsform betrifft die vorliegende Erfindung ein manuelles Verfahren nach Ausführungsform 64, dadurch gekennzeichnet, dass es sich bei der Nachbehandlung (J) um eine Lackierung handelt, wobei auf die Beschichtung des Bauteils ohne einen Zwischenschleifvorgang mindestens eine Basislackschicht und/oder mindestens eine Klarlackschicht aufgebracht wird und wobei die Basislackschicht(en) und Klarlackschicht(en) getrennt oder gemeinsam gehärtet werden.

Gemäß einer sechsundsechzigsten Ausführungsform betrifft die vorliegende Erfindung ein manuelles Verfahren nach einer der vorangehenden Ausführungsformen, dadurch gekennzeichnet, dass das Verfahren einen weiteren Verfahrensschritt umfasst, in welchem das Formwerkzeug nach der Entnahme des beschichten Bauteils in Verfahrensschritt (I) gereinigt, insbesondere manuell gereinigt, wird.

Gemäß einer siebenundsechzigsten Ausführungsform betrifft die vorliegende Erfindung ein manuelles Verfahren nach Ausführungsform 66, dadurch gekennzeichnet, dass der weitere Verfahrensschritt nach 20 bis 100, insbesondere 20 bis 50 Wiederholungen, der Verfahrensschritte (A) bis (I) durchgeführt wird.

Gemäß einer achtundsechzigsten Ausführungsform betrifft die vorliegende Erfindung ein manuelles Verfahren nach Ausführungsform 67, dadurch gekennzeichnet, dass der weitere Verfahrensschritt nach 20 bis 100, insbesondere 20 bis 50 Wiederholungen, der Verfahrensschritte (A) bis (I) durchgeführt wird.

### Beispiele

### Methodenbeschreibung:

### 1. Feststoffgehalt (Festkörper, nicht flüchtiger Anteil)

Die Bestimmung des nicht-flüchtigen Anteils erfolgt gemäß ASTM D2369 (Datum: 2015). Dabei werden 2 g Probe in eine vorher getrocknete Aluminiumschale eingewogen und 60 Minuten bei 110 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil.

### 2. Bestimmung der Entformungsenergie

Hierbei wird ein Klebestreifen (TESA 4651, siehe Datenblatt Tesa) mit den Maßen von 2,5 x 4 cm auf die Oberseite eines Formwerkzeugs geklebt. An einem Ende wird im Vorfeld das Klebeband einmal umgeklappt um eine Lasche zu haben, durch welche ein Loch gebohrt wird. In diesem Loch wird die Federwaage eingehängt. Mit einem Skalpell wird rings um das Klebeband der Lackfilm durchschnitten, so dass eine definierte Fläche von 10 cm² vorlag. Abzugsrichtung ist orthogonal zum Formwerkzeug.

### 3. Weiterverarbeitbarkeit

Die jeweilige Trennmittelzusammensetzung wurde auf ein 55°C warme Oberfläche eines Formwerkzeugs appliziert. Direkt nach Beendigung der Applikation wurde im 5-Sekundentakt möglichst gleichmäßig/mit gleichbleibendem Druck eine Fingerspitze in die flüssigen Trennmittelzusammensetzung getippt. Die jeweilige Trennmittelzusammensetzung war weiterverarbeitbar, sobald diese vollständig getrocknet war, sich jedoch nicht vom Formwerkzeug ablösen ließ.

### 4. Bestimmung der Säurezahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, welche zur Neutralisation von 1 g Probe unter den in der DIN EN ISO 2114 festgelegten Bedingungen erforderlich ist. Die angegebene Säure-Zahl entspricht dabei der in der DIN-Norm angegebenen Gesamtsäurezahl und ist bezogen auf den Feststoffgehalt.

### 5. Bestimmung der OH-Zahl

Die Bestimmung der OH-Zahl erfolgt nach DIN 53240-2 (Datum: Juni 2002), wobei "Verfahren A" eingesetzt wird. Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist. Die OH-Zahl ist auf den Feststoffgehalt der Probe bezogen.

### 6. Bestimmung des zahlen- und gewichtsmittleren Molekulargewichts

Die Bestimmung des zahlenmittleren Molekulargewichts (Mₙ) erfolgt mittels Gelpermeationschromatographie (GPC) gemäß DIN 55672-1 (März 2016). Neben dem zahlenmittleren Molekulargewicht können mit dieser Methode zudem das gewichtsmittlere Molekulargewicht (M_{w}) sowie die Polydispersität d (Verhältnis von gewichtsmittlerem Molekulargewicht (M_{w}) zu zahlenmittlerem Molekulargewicht (Mₙ₎) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### Ausführungsbeispiele

Die nachfolgenden Beispiele und Vergleichsbeispiele dienen der Erläuterung der Erfindung. Hinsichtlich der angegebenen Formulierungsbestandteile und deren Mengen ist folgendes zu berücksichtigen. Wird auf ein Handelsprodukt verwiesen, ist unabhängig von der jeweils gewählten Hauptbenennung des Bestandteils genau dieses Handelsprodukt gemeint.

### 1. Eingesetzte Trennmittelzusammensetzungen

Die Trennmittelzusammensetzungen Z1 bis Z6 werden jeweils durch homogenes Vermischen der in Tabelle 1 angegebenen Bestandteile erhalten.

**Tabelle 1: verwendete Trennmittelzusammensetzungen**

| | **Z1** | **Z2*** | **Z3** | **Z4*** | **Z5*** | **Z6*** |
|---|---|---|---|---|---|---|
| Parocryl 4085¹⁾ | 108,9 | 201,5 | - | - | 50,38 | 201,5 |
| Desmophen 670 BA²⁾ | 108,9 | 201,5 | - | - | 352,62 | 201,5 |
| 1-Methoxy-2-proplyacetat | 201,1 | 213,0 | - | - | 213,0 | 213,0 |
| Additiv MI-8010³⁾ | - | 23,5 | - | 22,3 | 23,5 | 23,5 |
| Borchi Gol OL17⁴⁾ | - | 9,50 | - | 9,02 | 9,50 | 9,50 |
| Silmer OHT Di-10⁵⁾ | - | 4,50 | - | 4,27 | 4,50 | 4,50 |
| Tinuvin 1130⁶⁾ | 2,43 | 4,50 | - | - | 4,50 | 4,50 |
| Butylacetat | 15,7 | 29,0 | - | - | 29,0 | 29,0 |
| K-Kat XK-651⁷⁾ | 7,03 | 7,03 | - | - | 7,03 | 7,03 |
| Desmodur N 3800⁸⁾ | 154,0 | 154,0 | - | - | 154,0 | 154,0 |
| Permutex RP-39-525 ⁹) | - | - | 763,2 | 727,6 | - | - |
| Permutex XR-5577 ¹⁰) | - | - | 84,8 | 84,8 | - | - |
| Basisfarbe BF ¹¹⁾ | - | - | - | - | - | 169,6 |

| | | | | | | |
|---|---|---|---|---|---|---|
| * in erfindungsgemäßem Verfahren eingesetzt ¹⁾ hydroxyfunktionelles Poly(meth)acrylat mit einer Hydroxylzahl von 82,5 mg KOH/g, einer Säurezahl von 10 mg KOH/g, Mₙ ca. 6.800 g/mol, M_{w} ca. 17.000 g/mol (BASF SE), ²⁾ Polyesterpolyol mit einer Hydroxylzahl von 115 mg KOH/g und einer Hydroxylfunktionalität von ca. 3,5 (Covestro), ³⁾ Mischung von Verbindungen der Formel R¹-(C=O)ᵣ-O-(AO)ₛ-R² aus (a) R¹ = Mischung gesättigter und ungesättigter Kohlenwasserstoffreste mit 12 bis 22 Kohlenstoffatomen, r = 0, AO = Mischung aus hauptsächlich Ethylenoxid- und wenig Propylenoxid-Einheiten und R² = H (Mₙ ≈ 650 g/mol); und (b) R¹ = ungesättigter Kohlenwasserstoffrest mit 21 Kohlenstoffatomen, s = 0 und R² = H (Münch Chemie International GmbH), ⁴⁾ polyethermodifiziertes Methylpolysiloxan (Borchers GmbH), ⁵⁾ Hydroxymodifiziertes Polysiloxan der Formel (III) mit den zuvor angeführten Resten (Siltec GmbH & Co. KG), ⁶⁾ UV-Absorber A8 (BASF Corporation) ⁷⁾ Bismutneodecanoat (King Industries) ⁸⁾ Hexamethylendiisocyanat-Trimer des Isocyanurat-Typs mit einem NCO-Gehalt von 11,0 Gew.-% (Covestro) ⁹⁾ wässrige Polyurethandispersion (Firma Stahl Holdings B.V.) ¹⁰⁾ wässrige Dispersion eines Polycarbodiimids (Firma Stahl Holdings B.V.) ¹¹⁾ Basisfarbe BF ist ausgewählt aus 55-M 1 1L Effekt Additiv, 55-A 098 0.5L steinweiss, 55-M 141 0.5L gelb, 55-M 306 1L rostrot, 55-A 556 1L ozeanblau 2, 55-A 640 1L blaugrün, 55-A 974 1L tönschwarz, 55-M 99-21 1.0L kristallsilber grob, 55-M 800 1L perl rotbraun | | | | | | |

### 2. Bestimmung der Haftkraft der Trennmittelzusammensetzung auf der Oberfläche eines Formwerkzeugs

Die Bestimmung der Haftkraft erfolgt wie zuvor beschrieben. Die Ergebnisse sind in Tabelle 2 wiedergegeben.

**Tabelle 2: Haftkraft der Trennmittelzusammensetzungen auf einem Formwerkzeug**

| | **Haftkraft [N]** |
|---|---|
| Z1 | 5** |
| Wässriges Trennmittel WT¹⁾ + Z1 | 1,6 |
| Z2* | 0,5 |
| Wässriges Trennmittel WT¹⁾ + Z2 | 0,15 |
| Z3 | 4,9 |
| Wässriges Trennmittel WT¹⁾ + Z3 | 0,9 |
| Z4* | 0,6 |
| Wässriges Trennmittel WT¹⁾ + Z4 | 0,1 |

| | |
|---|---|
| *in erfindungsgemäßem Verfahren eingesetzt **Delamination ¹⁾ Acmosil 36-5645-19 (Emulsion von Polysiloxanen und andere Wirkstoffen in Wasser) | |

Die nicht erfindungsgemäß verwendete Zusammensetzung Z1 konnte nicht vom Formwerkzeug getrennt werden, da das Klebeband bei 5 Newton delaminierte. Wurde vor Auftragung der Zusammensetzung Z1 zusätzlich ein externes Trennmittel (wässriges Trennmittel WT) aufgetragen, so verbesserte sich die Enttrennbarkeit deutlich. Die erfindungsgemäß verwendeten Zusammensetzungen Z2 und Z4 weisen auch ohne Verwendung eines zusätzlichen externen Trennmittels eine gute Entformbarkeit auf, wobei sogar eine bessere Entformbarkeit erreicht wird als bei Kombination der Zusammensetzung Z1 und Z3 mit dem externen Trennmittel (WT). Die Entformbarkeit der erfindungsgemäß verwendeten Zusammensetzungen Z2 und Z4 kann durch Verwendung eines zusätzlichen externen Trennmittels (wässriges Trennmittel WT) weitergehend verbessert werden. Darüber hinaus führt der Zusatz der mindestens einen Basisfarbe BF nicht zu einer Erhöhung der Haftkraft, so dass die gute Entformbarkeit der Zusammensetzung durch die Pigmentierung nicht negativ beeinflusst wird (vgl. Zusammensetzungen Z2 und Z6).

### 3. Bestimmung der Weiterverarbeitungszeit

Die Bestimmung der Weiterverarbeitungszeit erfolgt wie zuvor beschrieben. Die Ergebnisse sind in Tabelle 3 wiedergegeben.

**Tabelle 3: Weiterverarbeitungszeit der Trennmittelzusammensetzungen**

| | **Weiterverarbeitungszeit [s]** |
|---|---|
| Z1 | 30 |
| Z2* | 25 |
| Z3 | 85 |
| Z4* | 30 |

| | |
|---|---|
| * in erfindungsgemäßem Verfahren eingesetzt | |

Aus Tabelle 3 geht hervor, dass die erfindungsgemäß verwendeten Zusammensetzungen Z2 und Z4 eine geringere Ablüftungszeit aufweisen, als die nicht erfindungsgemäßen Zusammensetzungen Z1 und Z3. Zudem führt der Zusatz der Basisfarbe BF nicht zu einem negativen Einfluss auf die Ablüftzeit (vgl. Zusammensetzungen Z2 und Z6). Diese geringen Ablüftzeiten erlauben kurze Prozesszeiten des Verfahrensschritts (B) und somit eine effiziente Verfahrensführung.

### 4. Herstellung und Prüfung beschichteter Bauteile

### 4.1 Herstellung beschichteter Bauteile

Die Trennmittelzusammensetzungen Z1 bis Z6 wurden jeweils manuell pneumatisch (SATA Jet 4000 B HVLP mit 1,0er Düse) auf die Oberfläche eines Formwerkzeugs in Plattenform appliziert (die Form besteht aus einer Aluminiumlegierung; Plattengröße: 200 mm x 200 mm x 20 mm, unstrukturiert) (Verfahrensschritt (A)). Die Formtemperatur betrug 55°C bzw. 65 °C. Anschließend wurde die Beschichtungsmittelschichten abgelüftet (Ablüftdauer: 20 bis 90 s; Trockenschichtdicke: ca. 80 µm (lichtmikroskopisch)) (Vefahrensschritt (B)).

Nach dem Ablüften wurde ein polyesterbasiertes Polyurethan-Schaumsystem eingespritzt (Verfahrensschritt (D)). Dieses System ist erhältlich durch Vermischen einer A-Komponente (enthält 100 Gew.-% Polyol mixture 270/40¹⁾ sowie 10,6 Gew.-% Katalysator Catalyst Elastopan S 7429/155²⁾) mit einer B-Komponente (enthält Iso 187/68³⁾) im Verhältnis 100:84. Die Schaumdichte beträgt 280 bis 320 kg/m³.
¹ Polyesterpolyol-Mischung mit einer OH-Zahl von 51 mg KOH/g (BASF Italia S.p.A)
² Isocyanat auf Basis von 4,4'-Diphenylmethandiisocyanat mit einem NCO-Gehalt von 18,7 % (BASF Italia S.p.A.)
³ Mischung aliphatischer tertiärer Amine, Glykole und Stabilisatoren mit einem Wassergehalt von 3,9 Gew.-% (BASF Italia S.p.A.)

Nach dem Schließen der Formwerkzeuge (Verfahrensschritt (E)) erfolgte die Vernetzung bzw. Härtung der Trennmittelschicht sowie die Ausbildung des Polyurethanschaums über einen Zeitraum von 4 min in geschlossener Form bei 55°C bzw. 65 °C (Verfahrensschritt (F)).

Nach Ablauf der 4-minütigen Härtungszeit wurden die Formen geöffnet (Verfahrensschritt (H)). Der beschichtete Schaumstoff ließ ohne Hilfsmittel, manuell, leicht und vollständig aus dem Werkzeug entnehmen (Verfahrensschritt (I)). Allerdings erfüllt nur die Oberfläche der mit den Zusammensetzungen Z2, Z4, Z5 und Z6 hergestellten Bauteile (erfindungsgemäß) die in der Schuhindustrie geforderte Mattierung. Die Oberfläche der mit den Zusammensetzungen Z1 und Z3 hergestellten Bauteile (nicht erfindungsgemäß) glänzt stark.

### 4.2 Rossflextest

Mit den zuvor herstellten Bauteilen wurde der Rossflextest gemäß ASTM D1052:2009 mit einem Biegewinkel von 60° durchgeführt. Der Test wurde jeweils über 100.000 Zyklen durchgeführt, wobei die Bauteile nach 50.000 Zyklen und anschließend jeweils nach 10.000 Zyklen visuell auf das Vorliegen von Verletzungen der Oberfläche der Beschichtung untersucht wurden.

Selbst nach 100.000 Zyklen wiesen die mit dem erfindungsgemäßen Verfahren beschichten Bauteile keine Verletzungen der Oberfläche auf. Die mit diesem Verfahren erzielten Beschichtungen führen demnach nicht nur zu einer hervorragenden Entformbarkeit der Bauteile nach deren Herstellung, sondern weisen auch eine hohe Haftung auf den Bauteilen sowie eine hohe Flexibilität auf. Die Beschichtung ist demnach auch äußerst beständig und führt daher nicht zu Weißbruch, wie er beispielsweise bei der Vakuumfolierung auftritt.

### 4.3 Reibechtheit

Die Reibechtheit des mit der Trennmittelzusammensetzung Z6 hergestellten Bauteils wurde anhand der DIN EN ISO 11640:2017-05 geprüft. Hierzu wurde das jeweilige Bauteil in ein Crockmeter der Fa. SDL Atlas eingespannt. Auf die lackierte Seite des Bauteils wurde mit einer Anpresskraft von 9 N über 25 Doppelhübe mit einer Hublänge von 5 cm ein handelsübliches Schleifpapier mit P280er Körnung gerieben. Anschließend wurde der farbige Rückstand auf dem Schleifpapier sowie die Oberfläche der Beschichtung visuell beurteilt. Zwar wies das Schleifpapier geringe Rückstände der Beschichtung auf, jedoch wurde die Beschichtung nicht sichtbar verletzt. Das erfindungsgemäße Verfahren führt demnach zu Beschichtungen, welche eine gute Reibechtheit aufweisen.

### 4.4 Migrationsechtheit

Zur Überprüfung des Migrationsverhaltens der Pigmente unter Druck wurde das Lacksystem 1-NOVO gemäß DIN EN ISO 15701:2015-07 untersucht. Dabei wurde auf die lackierte Seite des mit der Trennmittelzusammensetzung Z6 beschichteten Bauteils eine PVC-Folie (nach EN ISO 15701) der Fa. James Heal gelegt. Bauteil und PVC-Folie wurden zwischen zwei Glasplatten in einem Perspirometer der Fa. James Heal eingespannt und mit einem Gewicht von 4,5 kg beschwert. Das Perspirometer wurde anschließend für 16 h bei 50 °C gelagert. Nach Ablauf der Lagerzeit wurde die Versuchsanordnung wieder auseinander gebaut und die PVC-Folie visuell auf Verfärbungen überprüft. Bei dem geprüften Bauteil trat keine Verfärbung der PVC-Folie auf. Das beschichteten Bauteil besitzt daher eine hohe Migrationsechtheit.

### 4.5 Farbtongenauigkeit, Farbtonintensität

Die Farbtongenauigkeit und die Farbtonintensität eines Bauteils B1 (beschichtet mit pigmentierter Trennmittelzusammensetzung Z6, unpigmentiertes Schaumsystem) wurde visuell mit der Farbtonintensität eines Bauteil B2 (beschichtet mit unpigmentierter Trennmittelzusammensetzung Z2; blau pigmentiertes Schaumsystem) beurteilt. Es wurden die folgenden Ergebnisse erhalten (Note 1: Farbtongenauigkeit vergleichbar mit Fahrzeugserienlackierung bzw. sehr hohe Farbtonintensität, Note 2: Farbtongenauigkeit schlechter als bei Fahrzeugserienlackierung bzw. hohe Farbtonintensität, Note 3: Farbtongenauigkeit signifikant schlechter als bei Fahrzeugserienlackierung bzw. geringe Farbtonintensität)

| **Bauteil** | **Farbtongenauigkeit** | **Farbtonintensität** |
|---|---|---|
| B1 | 3 | 3 |
| B2 | 1 | 1 |

Wie aus obiger Tabelle hervorgeht, führt die Beschichtung von Bauteilen im erfindungsgemäßen Verfahren mit pigmentierten Trennmittelzusammensetzungen (Bauteil B1) zu einer höheren Farbtongenauigkeit und Farbtonintensität als die Pigmentierung des Schaumstoffmaterials (Bauteil B2).

### 4.6 Verträglichkeit

Zur Bestimmung der Verträglichkeit der Beschichtungsmittelzusammensetzungen mit zur Herstellung von Bauteilen verwendeten Schaumzusammensetzungen wurden Bauteile hergestellt, wie unter Punkt 4.1 beschrieben. Zur Herstellung der Bauteile wurden sowohl die Trennmittelzusammensetzung Z2, ein wachsbasiertes Trennmittel (Münch Chemie) sowie ein silikonbasiertes Trennmittel (Münch Chemie) verwendet. Die Verträglichkeit des Trennmittels mit dem zur Herstellung des Bauteils verwendeten Schaumsystem wurde visuell beurteilt, wobei sich eine Unverträglichkeit durch Beulen und Dellen im Schaum wiederspiegelt. Es wurden die folgenden Ergebnisse erhalten (Note 1: sehr gute Verträglichkeit, Note 2: gute Verträglichkeit, Note 3: befriedigende Verträglichkeit, Note 4: ausreichende Verträglichkeit)

**Tabelle 4: Verträglichkeit der Trennmittelzusammensetzungen**

| **Bauteil** | **Trennmittelzusammensetzung** | **Verträglichkeit** |
|---|---|---|
| B1* | Z2 | 1 |
| B2 | wachsbasiertes Trennmittel | 3 |
| B3 | silikonbasiertes Trennmittel | 4 |

| | | |
|---|---|---|
| * erhältlich mittels erfindungsgemäßem Verfahren | | |

Aus Tabelle 4 geht hervor, dass die in dem erfindungsgemäßen Verfahren verwendete Trennmittelzusammensetzung Z2 eine sehr gute Verträglichkeit mit dem zur Herstellung der Bauteile verwendeten Schaumsystem aufweist. Das erfindungsgemäß hergestellte Bauteil (B1) weist keinen Beulen oder Dellen auf. Hingegen weisen die nicht erfindungsgemäß hergestellten Bauteile (B2, B3) aufgrund der lediglich befriedigenden bzw. ausreichenden Verträglichkeit zwischen Trennmittel und Schaumsystem Beulen und Dellen auf.

### 4.7 Einfluss der Trennmittelzusammensetzung auf die Fließeigenschaften der zur Herstellung von Bauteilen verwendeten Zusammensetzung

Zur Bestimmung des Einflusses der Trennmittelzusammensetzungen auf die zur Herstellung von Bauteilen verwendeten Schaumzusammensetzungen wurden Bauteile hergestellt, wie unter Punkt 4.1 beschrieben. Zur Herstellung der Bauteile wurden sowohl die Trennmittelzusammensetzung Z2 (erfindungsgemäßes Bauteil B1) sowie ein wässriges Trennmittel (MP6032-5, Münch Chemie) (nicht erfindungsgemäßes Bauteil B2) verwendet. Als Formwerkzeuge wurde ein Formwerkzeug mit einfacher Geometrie in Plattenform, ein Formwerkzeug mit komplexerer Geometrie in Schuhsohlenform sowie ein Formwerkzeug mit verwinkelter Geometrie, welches nur wenige Millimeter breite Stege aufweist, verwendet. Sowohl die Entformung als auch die Ausfüllung des Formwerkzeugs durch das Schaumsystem wurde visuell beurteilt. Es wurden die folgenden Ergebnisse erhalten (Note 1: sehr gute Entformung bzw. sehr hohe Verbesserung der Fließeigenschaften, Note 2: gute Entformung bzw. hohe Verbesserung der Fließeigenschaften, Note 3: befriedigende Entformung bzw. geringe Defekte im Bauteil, Note 4: ausreichende Entformung bzw. hohe Anzahl an Defekten im Bauteil)

**Tabelle 5: Einfluss der Trennmittelzusammensetzungen auf die Fließeigenschaften des Schaumsystems**

| **Formwerkzeug** | **Bauteil** | **Entformbarkeit** | **Einfluss auf Fließeigenschaften** |
|---|---|---|---|
| Plattenform | B1* | 1 | 1 |
| | B2 | 1 | 1 |
| Schuhsohle | B1* | 1-2 | 1 |
| | B2 | 2-3 | 2 |
| Verwinkelte Geometrie | B1* | 2 | 1 |
| | B2 | 3-4 | 3 |

| | | | |
|---|---|---|---|
| * erhältlich mittels erfindungsgemäßem Verfahren | | | |

Aus Tabelle 5 geht hervor, dass mit dem erfindungsgemäßen Verfahren selbst dann eine hervorragende Entformbarkeit erreicht wird, wenn Formwerkzeuge mit äußerst komplexer Geometrie verwendet werden. Zudem wird mit dem erfindungsgemäßen Verfahren eine verbesserte Fließeigenschaft des Schaumsystems erreicht, so dass auch enge Kavitäten des Formwerkzeugs vollständig mit der Schaumzusammensetzung gefüllt werden können. Dies erlaubt die defektfreie Herstellung von Bauteilen mit komplexer Geometrie. Hingegen führt ein nicht erfindungsgemäßes Verfahren bei komplexeren Formwerkzeugen zu einer schlechteren Entformbarkeit. Weiterhin treten bei diesem Verfahren insbesondere bei komplexen Formwerkzeugen Defekte aufgrund der fehlenden Füllung von Kavitäten auf.

## Patentansprüche

1. Manuelles Verfahren zum Spritzformen von beschichteten Bauteilen, insbesondere Sohlen aus Kunststoff, umfassend die nachfolgenden Schritte in der angegebenen Reihenfolge:
(A) Applizieren einer Trennmittelzusammensetzung auf mindestens eine Innenseite mindestens eines Formteils eines verschließbaren Formwerkzeugs,
(B) Ablüften der in Schritt (A) applizierten Trennmittelzusammensetzung,
(C) gegebenenfalls Einlegen mindestens eines Materials M1 und Erhitzen des Formwerkzeugs,
(D) Applizieren einer Zusammensetzung Z1 in das geöffnete Formwerkzeug,
(E) Manuelles Verschließen des Formwerkzeugs,
(F) Vernetzen der Trennmittelzusammensetzung sowie der in Verfahrensschritt (D) applizierten Zusammensetzung Z1,
(G) gegebenenfalls Applizieren mindestens einer weiteren Zusammensetzung Z2 sowie Vernetzen dieser Zusammensetzung(en),
(H) Manuelles Öffnen des Formwerkzeugs,
(I) Manuelle Entnahme des geformten und beschichteten Bauteils und
(J) gegebenenfalls Nachbehandlung des geformten und beschichteten Bauteils, wobei die Trennmittelzusammensetzung umfasst:
(a) mindestens ein Lösungsmittel L,
(b) mindestens eine Verbindung der allgemeinen Formel (I)
R¹-(C=O)ᵣ-O-(AO)ₛ-R² (I)
worin R¹ ein gesättigter oder ungesättigter, aliphatischer Kohlenwasserstoffrest mit 6 bis 30 Kohlenstoffatomen ist,
R² für H, einen Rest PO(OH)₂ oder den gegebenenfalls teilweise phosphatierten Rest eines Mono- oder Disaccharids oder den gegebenenfalls teilweise phosphatierten Rest eines Alditols steht,
AO für einen oder mehrere Alkylenoxid-Reste gewählt aus der Gruppe bestehend aus Ethylenoxid, Propylenoxid und Butylenoxid steht,
r = 0 oder 1 ist, und s = 0 bis 30 ist;
(c) gegebenenfalls mindestens ein polyethermodifiziertes Alkylpolysiloxan
(d) mindestens ein Polysiloxan der allgemeinen Formel (II)
R³-Si(R⁴)₂-[O-Si(R⁴)(R⁵)]ₐ-[O-Si(R⁴)₂]_{b}-O-Si(R⁴)₂-R³ (II),
worin
R³ und R⁴, jeweils unabhängig voneinander, für eine Methylgruppe oder einen Rest (HO-CH₂)₂-C(CH₂-CH₃)-CH₂-O-(CH₂)₃-* stehen,
R⁵ für eine Methylgruppe steht,
a für 0 oder 1 bis 10 steht und
b für 3 bis 30 und
(e) mindestens ein Bindemittel B,
wobei die Trennmittelzusammensetzung zusätzlich mindestens ein Vernetzungsmittel V enthält.

2. Verfahren nach Anspruch 1, **dadurch gekennzeichnet, dass** die Trennmittelzusammensetzung eine Viskosität von 10 bis 60 s, insbesondere von 20 bis 30 s, nach DIN4 Auslaufbecher, gemessen gemäß DIN EN ISO 2431 in Ausgabe März 2012, aufweist.

3. Verfahren nach einem der Ansprüche 1 oder 2, **dadurch gekennzeichnet, dass** in der allgemeinen Formel (I) R¹ für einen gesättigten oder ungesättigten, aliphatischen Kohlenwasserstoffrest mit 10 bis 24 Kohlenstoffatomen steht, R² für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht, AO für einen oder mehrere Alkylenoxid-Reste gewählt aus der Gruppe bestehend aus Ethylenoxid und Propylenoxid steht, r = 0 oder 1 ist und s = 0 oder 1 bis 25 ist.

4. Verfahren nach einem der vorangehenden Ansprüche, **dadurch gekennzeichnet, dass** die Trennmittelzusammensetzung die mindestens eine Verbindung der allgemeinen Formel (I) in einer Gesamtmenge von 0,1 bis 10 Gew.-%, besonders bevorzugt 0,5 bis 5 Gew.-%, insbesondere 1,5 bis 4 Gew.-%, jeweils bezogen das Gesamtgewicht der Trennmittelzusammensetzung, enthält.

5. Verfahren nach einem der vorangehenden Ansprüche, **dadurch gekennzeichnet, dass** das polyethermodifizierte Alkylpolysiloxan mindestens eine Struktureinheit (R⁷)₂(OR⁶)SiO_{1/2} und mindestens eine Struktureinheit (R⁷)₂SiO_{2/2}, wobei R⁶ für eine Ethylenoxid-, Propylenoxid- und Butylenoxidgruppe, insbesondere eine Mischung von Ethylenoxid- und Propylenoxid- und Butylenoxidgruppen und R⁷ für eine C₁-C₁₀-Alkylgruppe, insbesondere eine Methylgruppe, steht, umfasst.

6. Verfahren nach einem der vorangehenden Ansprüche, **dadurch gekennzeichnet, dass** die Trennmittelzusammensetzung das mindestens eine polyethermodifizierte Alkylpolysiloxan in einer Gesamtmenge von 0 Gew.-% oder von 0,1 bis 6 Gew.-%, bevorzugt 0,5 bis 4 Gew.-%, insbesondere 0,8 bis 3 Gew.-%, jeweils bezogen auf das Gesamtgewicht der Trennmittelzusammensetzung, enthält.

7. Verfahren nach einem der vorangehenden Ansprüche, **dadurch gekennzeichnet, dass** in der allgemeinen Formel (II) der Rest R₃ für einen Rest (HO-CH₂)₂-C(CH₂-CH₃)-CH₂-O-(CH₂)₃-* steht, der Rest R₄ für eine Methylgruppe steht, der Rest R⁵ für eine Methylgruppe steht, a für 0 steht und b für 7 bis 14 steht.

8. Verfahren nach einem der vorangehenden Ansprüche, **dadurch gekennzeichnet, dass** die Trennmittelzusammensetzung das mindestens eine Polysiloxan der allgemeinen Formel (II) in einer Gesamtmenge von 0,1 bis 5 Gew.-%, bevorzugt 0,5 bis 4 Gew.-%, insbesondere 0,8 bis 2,5 Gew.-%, jeweils bezogen auf das Gesamtgewicht der Trennmittelzusammensetzung, enthält.

9. Verfahren nach einem der vorangehenden Ansprüche, **dadurch gekennzeichnet, dass** die Trennmittelzusammensetzung das mindestens eine Bindemittel B in einer Gesamtmenge, bezogen auf den Feststoffgehalt, von 20 bis 50 Gew.-%, vorzugsweise von 25 bis 40 Gew.-%, insbesondere von 25 bis 35 Gew.-%, jeweils bezogen auf das Gesamtgewicht der Zusammensetzung, enthält.

10. Verfahren nach einem der vorangehenden Ansprüche, **dadurch gekennzeichnet, dass** das Bindemittel B ausgewählt ist aus der Gruppe bestehend aus (i) Poly(meth)acrylaten, insbesondere hydroxyfunktionellen und/oder carboxylatfunktionellen und/oder aminfunktionellen Poly(meth)acrylaten, (ii) Polyurethanen, insbesondere hydroxyfunktionellen und/oder carboxylatfunktionellen und/oder aminfunktionellen Polyurethanen, (iii) Polyestern, insbesondere Polyester-Polyolen, (iv) Polyethern, insbesondere Polyether-Polyolen, (v) Mischpolymerisaten der genannten Polymere sowie (vi) deren Mischungen.

11. Verfahren nach einem der vorangehenden Ansprüche, **dadurch gekennzeichnet, dass** das Ablüften der Trennmittelzusammensetzung in Verfahrensschritt (B) für einen Zeitraum von 20 Sekunden bis 120 Minuten, vorzugsweise von 20 Sekunden bis 2 Minuten, insbesondere von 25 Sekunden bis 45 Sekunden, erfolgt.

12. Verfahren nach einem der vorangehenden Ansprüche, **dadurch gekennzeichnet, dass** es sich bei der in Verfahrensschritt (D) applizierten Zusammensetzung Z1 um einen Polymerschaum, insbesondere einen Polyurethanschaumstoff, handelt.

13. Verfahren nach einem der vorangehenden Ansprüche, **dadurch gekennzeichnet, dass** die Vernetzung in Verfahrensschritt (F) für einen Zeitraum von 1 bis 20 Minuten, vorzugsweise von 3 bis 15 Minuten, insbesondere von 4 bis 10 Minuten, erfolgt.

14. Verfahren nach einem der vorangehenden Ansprüche, **dadurch gekennzeichnet, dass** das Verfahren einen weiteren Verfahrensschritt umfasst, in welchem das Formwerkzeug nach der Entnahme des beschichten Bauteils in Verfahrensschritt (I) gereinigt, insbesondere manuell gereinigt, wird.

15. Verfahren nach Anspruch 14, **dadurch gekennzeichnet, dass** der weitere Verfahrensschritt nach 20 bis 100, insbesondere 20 bis 50 Wiederholungen, der Verfahrensschritte (A) bis (I) durchgeführt wird.

## Claims

1. A manual process for injection molding of coated components, more particularly soles of plastic, comprising the following steps in the order indicated:
(A) application of a release agent composition to at least one inside of at least one molding part of a closable molding tool,
(B) flashing of the release agent composition applied in step (A),
(C) optional insertion of at least one material M1 and heating of the molding tool,
(D) application of a composition Z1 into the opened molding tool,
(E) manual closing of the molding tool,
(F) crosslinking of the release agent composition and also of the composition Z1 applied in process step (D),
(G) optional application of at least one further composition Z2 and crosslinking of the composition(s),
(H) manual opening of the molding tool,
(I) manual removal of the molded coated component, and
(J) optional aftertreatment of the molded coated component,
where the release agent composition comprises:
(a) at least one solvent L,
(b) at least one compound of the general formula
(I) R¹- (C=O) ᵣ-O- (AO) ₛ-R² (I)
in which R¹ is a saturated or unsaturated, aliphatic hydrocarbon radical having 6 to 30 carbon atoms,
R² is H, a PO(OH)₂ radical, or the optionally partially phosphated radical of a monosaccharide or disaccharide, or the optionally partially phosphated radical of an alditol,
AO stands for one or more alkylene oxide radicals selected from the group consisting of ethylene oxide, propylene oxide and butylene oxide,
r is 0 or 1, and s is 0 to 30;
(c) optionally at least one polyether-modified alkylpolysiloxane,
(d) at least one polysiloxane of the general formula
(II) R³-Si(R⁴)₂-[O-Si(R⁴)(R⁵)]ₐ-[O-Si(R⁴)₂]_{b}-O-Si(R⁴)₂-R³ (II),
in which
R³ and R⁴, in each case independently of one another, are a methyl group or a (HO-CH₂)₂-C(CH₂-CH₃)-CH₂-O-(CH₂)₃-* radical,
R⁵ is a methyl group,
a is 0 or 1 to 10, and
b is 3 to 30; and
(e)at least one binder B,
where the release agent composition additionally comprises at least one crosslinking agent V.

2. The process according to claim 1, wherein the release agent composition has a viscosity of 10 to 60 s, more particularly of 20 to 30 s, by DIN4 flow cup, measured according to DIN EN ISO 2431 in March 2012 edition.

3. The process according to either of claims 1 and 2, wherein, in the general formula (I), R¹ is a saturated or unsaturated aliphatic hydrocarbon radical having 10 to 24 carbon atoms, R² is H, a PO(OH)₂ radical, or the optionally partially phosphated radical of a monosaccharide or disaccharide, or the optionally partially phosphated radical of an alditol, more particularly of sorbitol, AO stands for one or more alkylene oxide radicals selected from the group consisting of ethylene oxide and propylene oxide, r is 0 or 1, and s is 0 or 1 to 25.

4. The process according to any of the preceding claims, wherein the release agent composition comprises the at least one compound of the general formula (I) in a total amount of 0.1 to 10 wt%, more preferably 0.5 to 5 wt%, more particularly 1.5 to 4 wt%, based in each case on the total weight of the release agent composition.

5. The process according to any of the preceding claims, wherein the polyether-modified alkylpolysiloxane comprises at least one structural unit (R⁷) ₂ (OR⁶) SiO_{1/2} and at least one structural unit (R⁷) ₂SiO_{2/2}, where R⁶ is an ethylene oxide, propylene oxide, and butylene oxide group, more particularly a mixture of ethylene oxide and propylene oxide and butylene oxide groups, and R⁷ is a C₁-C₁₀ alkyl group, more particularly a methyl group.

6. The process according to any of the preceding claims, wherein the release agent composition comprises the at least one polyether-modified alkylpolysiloxane in a total amount of 0 wt% or of 0.1 to 6 wt%, preferably 0.5 to 4 wt%, more particularly 0.8 to 3 wt%, based in each case on the total weight of the release agent composition.

7. The process according to any of the preceding claims, wherein, in the general formula (II), the radical R₃ is a (HO-CH₂) ₂-C (CH₂-CH₃) -CH₂-O- (CH₂) ₃-* radical, the radical R₄ is a methyl group, the radical R⁵ is a methyl group, a is 0, and b is 7 to 14.

8. The process according to any of the preceding claims, wherein the release agent composition comprises the at least one polysiloxane of the general formula (II) in a total amount of 0.1 to 5 wt%, preferably 0.5 to 4 wt%, more particularly 0.8 to 2.5 wt%, based in each case on the total weight of the release agent composition.

9. The process according to any of the preceding claims, wherein the release agent composition comprises the at least one binder B in a total amount, based on the solids content, of 20 to 50 wt%, preferably of 25 to 40 wt%, more particularly of 25 to 35 wt%, based in each case on the total weight of the composition.

10. The process according to any of the preceding claims, wherein the binder B is selected from the group consisting of (i) poly(meth)acrylates, more particularly hydroxy-functional and/or carboxylate-functional and/or amine-functional poly(meth)acrylates, (ii) polyurethanes, more particularly hydroxy-functional and/or carboxylate-functional and/or amine-functional polyurethanes, (iii) polyesters, more particularly polyester polyols, (iv) polyethers, more particularly polyether polyols, (v) copolymers of the stated polymers, and (vi) mixtures thereof.

11. The process according to any of the preceding claims, wherein the release agent composition is flashed in process step (B) for a period of 20 seconds to 120 minutes, preferably of 20 seconds to 2 minutes, more particularly of 25 seconds to 45 seconds.

12. The process according to any of the preceding claims, wherein the composition Z1 applied in process step (D) is a polymer foam, more particularly a polyurethane foam material.

13. The process according to any of the preceding claims, wherein the crosslinking in process step (F) takes place for a period of 1 to 20 minutes, preferably of 3 to 15 minutes, more particularly of 4 to 10 minutes.

14. The process according to any of the preceding claims, wherein the process comprises a further process step in which the molding tool, after the removal of the coated component in process step (I), is cleaned, more particularly manually cleaned.

15. The process according to claim 14, wherein the further process step is carried out after 20 to 100, more particularly 20 to 50, repetitions of process steps (A) to (I).

## Revendications

1. Procédé manuel pour le moulage par injection de pièces revêtues, en particulier de semelles en matière plastique, comprenant les étapes suivantes dans l'ordre indiqué :
(A) application d'une composition d'agent de démoulage sur au moins une face interne d'au moins une partie de moule d'un outil de moulage pouvant être fermé,
(B) évacuation de l'air de la composition d'agent de démoulage appliquée dans l'étape (A),
(C) éventuellement introduction d'au moins une matière M1 et chauffage de l'outil de moulage,
(D) application d'une composition Z1 dans l'outil de moulage ouvert,
(E) fermeture manuelle de l'outil de moulage,
(F) réticulation de la composition d'agent de démoulage ainsi que de la composition Z1 appliquée dans l'étape (D) du procédé,
(G) éventuellement application d'au moins une autre composition Z2 ainsi que réticulation de cette/ces composition(s),
(H) ouverture manuelle de l'outil de moulage,
(I) prélèvement manuel de la pièce moulée et revêtue et
(J) éventuellement post-traitement de la pièce moulée et revêtue,
la composition d'agent de démoulage comprenant :
(a) au moins un solvant L,
(b) au moins un composé de formule générale (I)
R¹- (C=O) ᵣ-O- (AO) ₛ-R² (I)
dans laquelle R¹ est un radical hydrocarboné aliphatique, saturé ou insaturé, ayant de 6 à 30 atomes de carbone,
R² représente H, un radical PO(OH)₂ ou le résidu éventuellement partiellement phosphaté d'un mono- ou disaccharide ou le résidu éventuellement partiellement phosphaté d'un alditol,
AO représente un ou plusieurs radicaux oxyde d'alkylène choisi(s) dans le groupe constitué par l'oxyde d'éthylène, l'oxyde de propylène et l'oxyde de butylène,
r = 0 ou 1, et s = 0 à 30 ;
(c) éventuellement au moins un alkylpolysiloxane modifié avec un polyéther
(d) au moins un polysiloxane de formule générale (II)
R³-Si (R⁴) ₂- [O (Si (R⁴) (R⁵) ] ₐ- [O-Si (R⁴) ₂] _{b}-O-Si (R⁴) ₂-R³ (II)
dans laquelle
R³ et R⁴ représentent chacun, indépendamment l'un de l'autre, un groupe méthyle ou un radical (HO-CH₂) ₂-C (CH₂-CH₃) -CH₂-O- (CH₂) ₃-*,
R⁵ représente un groupe méthyle,
a représente 0 ou 1 à 10 et
b représente 3 à 30 et
(e) au moins un liant B,
la composition d'agent de démoulage contenant en outre au moins un agent de réticulation V.

2. Procédé selon la revendication 1, **caractérisé en ce que** la composition d'agent de démoulage présente une viscosité de 10 à 60 s, en particulier de 20 à 30 s, selon le godet viscosimétrique DIN4, mesurée conformément à DIN EN ISO 2431 dans la version de mars 2012.

3. Procédé selon l'une des revendications 1 et 2, **caractérisé en ce que** dans la formule générale (I) R¹ représente un radical hydrocarboné aliphatique, saturé ou insaturé, ayant de 10 à 24 atomes de carbone, R² représente H, un radical PO(OH)₂ ou le résidu éventuellement partiellement phosphaté d'un mono- ou disaccharide ou le résidu éventuellement partiellement phosphaté d'un alditol, en particulier du sorbitol, AO représente un ou plusieurs radicaux oxyde d'alkylène choisi(s) dans le groupe constitué par l'oxyde d'éthylène et l'oxyde de propylène, r = 0 ou 1, et s = 0 ou 1 à 25.

4. Procédé selon l'une des revendications précédentes, **caractérisé en ce que** la composition d'agent de démoulage contient ledit au moins un composé de formule générale (I) en une quantité totale de 0,1 à 10 % en poids, de façon particulièrement préférée 0,5 à 5 % en poids, en particulier 1,5 à 4 % en poids, chaque fois par rapport au poids total de la composition d'agent de démoulage.

5. Procédé selon l'une des revendications précédentes, **caractérisé en ce que** l'alkylpolysiloxane modifié avec un polyéther comprend au moins une unité structurale (R⁷) ₂ (OR⁶) SiO_{1/2} et au moins une unité structurale (R⁷) ₂SiO_{2/2}, R⁶ représentant un groupe oxyde d'éthylène, oxyde de propylène et oxyde de butylène, en particulier un mélange de groupes oxyde d'éthylène et oxyde de propylène et oxyde de butylène, et R⁷ représente un groupe alkyle en C₁-C₁₀, en particulier un groupe méthyle.

6. Procédé selon l'une des revendications précédentes, **caractérisé en ce que** la composition d'agent de démoulage contient ledit au moins un alkylpolysiloxane modifié avec un polyéther en une quantité totale de 0 % en poids ou de 0,1 à 6 % en poids, de préférence 0,5 à 4 % en poids, en particulier 0,8 à 3 % en poids, chaque fois par rapport au poids total de la composition d'agent de démoulage.

7. Procédé selon l'une des revendications précédentes, **caractérisé en ce que** dans la formule générale (II) le radical R³ représente un radical (HO-CH₂) ₂-C (CH₂-CH₃) -CH₂-O- (CH₂) ₃-*, le radial R₄ représente un groupe méthyle, le radical R⁵ représente un groupe méthyle, a représente 0 et b représente 7 à 14.

8. Procédé selon l'une des revendications précédentes, **caractérisé en ce que** la composition d'agent de démoulage contient ledit au moins un polysiloxane de formule générale (II) en une quantité totale de 0,1 à 5 % en poids, de préférence 0,5 à 4 % en poids, en particulier 0,8 à 2,5 % en poids, chaque fois par rapport au poids total de la composition d'agent de démoulage.

9. Procédé selon l'une des revendications précédentes, **caractérisé en ce que** la composition d'agent de démoulage contient ledit au moins un liant B en une quantité totale, par rapport à la teneur en matières solides, de 20 à 50 % en poids, de préférence de 25 à 40 % en poids, en particulier de 25 à 35 % en poids, chaque fois par rapport au poids total de la composition.

10. Procédé selon l'une des revendications précédentes, **caractérisé en ce que** le liant B est choisi dans le groupe constitué par (i) des poly(méth)-acrylates, en particulier des poly(méth)acrylates à fonction hydroxy et/ou à fonction carboxylate et/ou à fonction amine, (ii) des polyuréthanes, en particulier des polyuréthane(s) à fonction hydroxy et/ou à fonction carboxylate et/ou à fonction amine, (iii) des polyesters, en particulier des polyester-polyols, (iv) des polyéthers, en particulier des polyéther-polyols, (v) des copolymères des polymères cités ainsi que (vi) des mélanges de ceux-ci.

11. Procédé selon l'une des revendications précédentes, **caractérisé en ce que** l'évacuation de l'air de la composition d'agent de démoulage dans l'étape (B) du procédé s'effectue pendant une durée de 20 secondes à 120 minutes, de préférence de 20 secondes à 2 minutes, en particulier de 25 secondes à 45 secondes.

12. Procédé selon l'une des revendications précédentes, **caractérisé en ce que** pour ce qui est de la composition Z1 appliquée dans l'étape (D) du procédé il s'agit d'une mousse de polymère, en particulier d'une mousse de polyuréthane.

13. Procédé selon l'une des revendications précédentes, **caractérisé en ce que** la réticulation dans l'étape (F) du procédé s'effectue pendant une durée de 1 à 20 minutes, de préférence de 3 à 15 minutes, en particulier de 4 à 10 minutes.

14. Procédé selon l'une des revendications précédentes, **caractérisé en ce que** le procédé comprend une étape supplémentaire du procédé, dans laquelle l'outil de moulage est nettoyé, en particulier nettoyé manuellement, après le prélèvement dans l'étape (I) du procédé de la pièce revêtue.

15. Procédé selon la revendication 14, **caractérisé en ce que** l'étape supplémentaire du procédé est effectuée après 20 à 100, en particulier 20 à 50 répétitions, des étapes (A) à (I) du procédé.
